(19)

Europäisches
Patentamt

European
Patent Office

Office européen
des brevets

(11) **EP 4 542 924 A1**

(12) **EUROPEAN PATENT APPLICATION**

(43) Date of publication:
**23.04.2025  Bulletin 2025/17**

(51) International Patent Classification (IPC):
*H04L 9/32* $^{(2006.01)}$

(21) Application number: **23315390.7**

(52) Cooperative Patent Classification (CPC):
**H04L 9/3218**

(22) Date of filing: **16.10.2023**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Zama SAS
75002 Paris (FR)**

(72) Inventor: **Libert, Benoît
75002 Paris (FR)**

(74) Representative: **DeltaPatents B.V.
Fellenoord 370
5611 ZL Eindhoven (NL)**

(54) **EFFICIENT POLYNOMIAL COMMITMENT SCHEMES WITH SIMULATION-EXTRACTABILITY**

(57)     Some embodiments are directed to a method for cryptographically committing to a polynomial and for succinctly proving to a verifier an evaluation of the committed polynomial by means of a non-malleable proof. The method may include computing a base evaluation proof using a base proof function showing that a committed-to polynomial evaluates to a function value at a function argument, and further computing a zero-knowledge proof proving knowledge of the base evaluation proof satisfying a base verification equation correspond-ing to the polynomial.

$100 \rightarrow$

*Fig. 1a*

$102 \rightarrow$

*Fig. 1b*

EP 4 542 924 A1

**Description**

**TECHNICAL FIELD**

The presently disclosed subject matter relates to a method for cryptographically committing to a polynomial, and to prove to a verifier an evaluation of the polynomial, a system, a computer readable media.

**BACKGROUND**

A commitment scheme is the digital analogue of a safe or a sealed envelope. It commits the sender to a secret message that remains secret until the commitment is opened. In a non-interactive commitment, the commitment and the opening phase both contain a single message from the committer to the receiver. A commitment scheme should satisfy two properties called *hiding* and *binding*. The former means that a commitment string C reveals no information about the committed message. The latter requires that no adversary should be able to compute a commitment that can be opened for two distinct messages.

One of the most famous examples is the Pedersen commitment [33]. In a cyclic group $\mathbb{G}$ or prime order $p$ with generators $g, h \in \mathbb{G}$, the sender commits to a message $m \in \mathbb{Z}_p$ by choosing $r \xleftarrow{R} \mathbb{Z}_p$ and computing $C = g^m \cdot h^r$, for a random $r \xleftarrow{R} \mathbb{Z}_p$. In the opening phase, the sender simply reveals $m$ and $r$. The commitment $C$ perfectly hides $m$ thanks to the uniform randomness $r \in \mathbb{Z}_p$. At the same time, no efficient committer can come up with a commitment $C$ that can be opened in two different ways by revealing distinct pairs $(m, r) \neq (m', r')$ such that $C = g^m \cdot h^r = g^{m'} \cdot h^{r'}$ unless it can compute the discrete logarithm $\log_g(h)$. The Pedersen commitment naturally extends to commit to vectors of messages $(m_1, ..., m_n) \in \mathbb{Z}_p$. To this end, the committer needs public parameters containing generators $(g_1, ..., g_n, h) \in \mathbb{G}^{n+1}$ and computes $C = h^r \cdot \prod_{i=1}^{n} g_i^{m_i}$.

As introduced in [26], polynomial commitment schemes (PCS) allow a user to commit to a polynomial $f$ over some finite field by generating a short commitment string. Later, the committer should be able to succinctly reveal individual evaluations of the committed polynomial on some inputs by providing a proof $\pi$ that the claimed evaluation is correct without revealing anything else. For univariate polynomials, "succinctly" means that the size of the proof should be sublinear, ideally, constant or logarithmic, in the degree $d$ of committed polynomials. In the case of $\ell$-variate polynomials, the size of the proof should be sublinear in the total degree of committed polynomials, but it is allowed to depend on the number of variables.

As in standard commitments, a PCS should satisfy two security properties: (i) The *evaluation binding* property asserts that no efficient adversary can generate a commitment for which it can convincingly prove two distinct evaluations $y \neq y'$ for the same input $x$; and (ii) The *hiding* property guarantees that revealing a subset of evaluations does not reveal any more information about the committed polynomial beyond what can be inferred from the polynomial evaluations themselves.

Polynomial commitments [26] are widely used in the construction of *succinct non-interactive arguments of knowledge* (SNARKs) in order to compile an Interactive Oracle Proof (IOP) [6] into succinct argument systems, which can in turn be made non-interactive using the Fiat-Shamir heuristic [16]. An IOP is a multi-round protocol between a prover and a verifier where, in each round, the verifier is given oracle access to a polynomial sent by the prover. After a number of queries to polynomial oracles at each round, the verifier decides to accept the proof or not.

In short, a SNARK is non-interactive proof system allowing a prover to succinctly convince a verifier that it knows a witness w such that $R(x, w) = 1$ for some NP relation $R$, (typically modeled as an arithmetic circuit), where $x$ is a statement. Here, "succinctly" means that the proof length and the verification time should be sublinear in the size of the arithmetic circuit $C$ and the length of the witness $w$ (which is usually an assignment of wire values leading the arithmetic circuit to output 0 for the public input $x$).

In the literature, most SNARKs are only proven to be knowledge-sound, which only ensures security against a prover that runs in isolation. This security notion does not guarantee anything against an adversary that can observe proofs generated by honest users and attempt to modify them in some way in order to prove a related statement of its own. To prevent such attacks, we need a stronger notion called *simulation-extractability*, which is the natural security property to expect when succinct arguments are widely observable in the wild.

The way to prove that a SNARK is simulation-extractable often depends on the underlying polynomial commitment, at least if one is willing to preserve its efficiency. Existing generic approaches either fail to preserve succinctness [29] or introduce overhead [1] by relying on additional primitives such as key-homomorphic signatures. The simulation-extractability compilers of [14,27] avoid these limitations, but they are not known to be applicable to multivariate polynomial IOPs. In particular, they require a commitment scheme that allows one to commit to multivariate polynomials. In this commitment scheme, evaluation proofs should not be randomizable, making it infeasible to publicly convert a proof for a given evaluation into a different proof for the same evaluation.

## SUMMARY

It would be advantageous to have an improved commitment and proving scheme for polynomials. In order to be applicable in the construction of simulation-extractable SNARKs, it is desirable to have evaluation proofs that are not malleable and are not randomizable. In particular, as observed in [14], a polynomial commitment with simulation-extractable evaluation proofs can make it easier to build simulation-extractable SNARKs from polynomial IOPs. A construction is provided in which a polynomial commitment scheme (PCS) is provided with various cryptographically desirable properties.

In an embodiment, a prover computes a base evaluation proof using a base proof function showing that a committed-to polynomial evaluates to a function value at a function argument, and further computing a zero-knowledge proof proving knowledge of the base evaluation proof satisfying a base verification equation corresponding to the polynomial.

By providing a verifier with a second proof that proves that the prover has access to a first proof that that shows the property of the polynomial, it is avoided that the first proof needs to be provided to the verifier.

The commitment and proving methods described herein may be applied in a wide range of practical applications. Such practical applications include for example verifiable computation.

An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium.

Another aspect of the presently disclosed subject matter is a method of making the computer program available for downloading. This aspect is used when the computer program is uploaded into a server, and when the computer program is available for downloading from such a server.

## BRIEF DESCRIPTION OF DRAWINGS

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,

Figure 1a schematically shows an example of an embodiment of a proving system,
Figure 1b schematically shows an example of an embodiment of a proving system,
Figure 2a schematically shows an example of a proving system,
Figure 2b schematically shows an example of an embodiment of a proving system,
Figure 3 schematically shows an example of an embodiment of a proving method,
Figure 4a schematically shows a computer readable medium having a writable part comprising a computer program according to an embodiment,
Figure 4b schematically shows a representation of a processor system according to an embodiment.

## Reference signs list

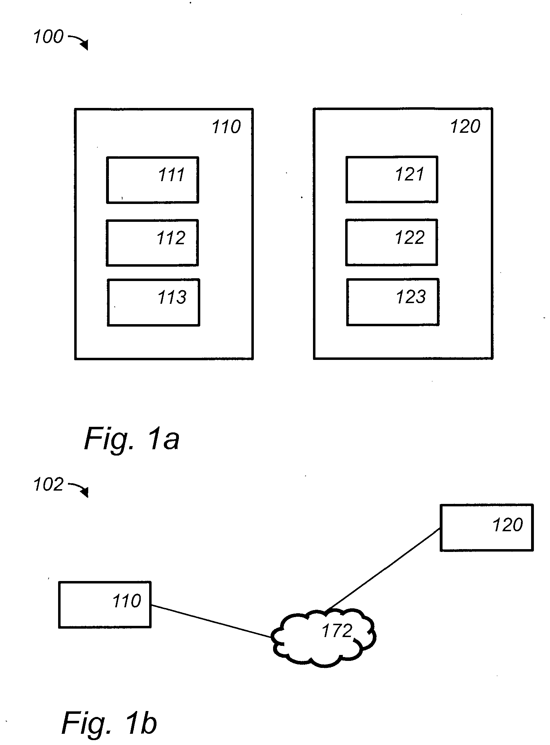

The following list of references and abbreviations corresponds to figures 1a-2b and is provided for facilitating the interpretation of the drawings and shall not be construed as limiting the claims.

EP 4 542 924 A1

| 100, 102 | a proving system |
| 110 | a prover device |
| 120 | a verifier device |
| 111, 121 | a processor system |
| 112, 122 | storage |
| 113, 123 | communication interface |
| 200, 203 | a proof system |
| 201 | a prover device |
| 202 | a verifier device |
| 210 | a base commitment function |
| 211 | a polynomial |
| 212 | a base commitment string |
| 220 | a base proof function |
| 221 | a function argument for a polynomial |
| 222 | a base evaluation proof |
| 223 | a first proof |
| 230 | a base verification equation |
| 232 | a verification result |
| 240 | a further proof function |
| 242 | a second proof |
| 250 | a verification equation |
| 252 | a verification result |
| | |
| 1000, 1001 | a computer readable medium |
| 1010 | a writable part |
| 1020 | a computer program |
| 1110 | integrated circuit(s) |
| 1120 | a processing unit |
| 1122 | a memory |
| 1124 | a dedicated integrated circuit |
| 1126 | a communication element |
| 1130 | an interconnect |
| 1140 | a processor system |

## DESCRIPTION OF EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

**Figure 1a** schematically shows an example of an embodiment of a prover device 110 and of an embodiment of a verifier device 120.

Prover device 110 and verifier device 120 may be part of a proving system 100.

Prover device 110 is configured to commit to a polynomial by generating a commitment string for a polynomial, and later to prove evaluations of the polynomial. That is, convincing a verifier that the polynomial committed-to evaluates to a particular value for a particular argument value. And moreover, to do this without revealing anything more about the polynomial than what is disclosed by the evaluation. Verifier device 120 is configured to verify the proof.

For example, the proving system 100 may be used in a variety of cryptographical applications, e.g., zero knowledge proofs, verified computations, and so on.

Prover device 110 may comprise a processor system 111, a storage 112, and a communication interface 113. Verifier device 120 may comprise a processor system 121, a storage 122, and a communication interface 123.

In the various embodiments of communication interfaces 113 and/or 123, the communication interfaces may be selected from various alternatives. For example, the interface may be a network interface to a local or wide area network, e.g., the Internet, a storage interface to an internal or external data storage, an application interface (API), etc.

Storage 112 and 122 may be, e.g., electronic storage, magnetic storage, etc. The storage may comprise local storage, e.g., a local hard drive or electronic memory. Storage 112 and 122 may comprise non-local storage, e.g., cloud storage. In the latter case, storage 112 and 122 may comprise a storage interface to the non-local storage. Storage may comprise multiple discrete sub-storages together making up storage 112 and 122.

Storage 112 and/or 122 may be non-transitory storage. For example, storage 112 and/or 122 may store data in the presence of power such as a volatile memory device, e.g., a Random Access Memory (RAM). For example, storage 112 and/or 122 may store data in the presence of power as well as outside the presence of power such as a non-volatile memory device, e.g., Flash memory. Storage may comprise a volatile writable part, say a RAM, a non-volatile writable part, e.g., Flash. Storage may comprise a non-volatile non-writable part, e.g., ROM.

The devices 110 and 120 may communicate internally, with each other, with other devices, external storage, input devices, output devices, and/or one or more sensors over a computer network. The computer network may be an internet, an intranet, a LAN, a WLAN, a WAN, etc. The computer network may be the Internet. The devices 110 and 120 may comprise a connection interface which is arranged to communicate within proving system 100 or outside of proving system 100 as needed. For example, the connection interface may comprise a connector, e.g., a wired connector, e.g., an Ethernet connector, an optical connector, etc., or a wireless connector, e.g., an antenna, e.g., a Wi-Fi, 4G or 5G antenna.

The communication interface 113 may be used to send or receive digital data, e.g., sending commitment strings, and proofs to the verifier device. The communication interface 123 may be used to send or receive digital data, e.g., to receive these.

Prover device 110 and verifier device 120 may have a user interface, which may include well-known elements such as one or more buttons, a keyboard, display, touch screen, etc. The user interface may be arranged for accommodating user interaction for performing a commitment and/or proof and/or verification.

The execution of devices 110 and 120 may be implemented in a processor system. The devices 110 and 120 may comprise functional units to implement aspects of embodiments. The functional units may be part of the processor system. For example, functional units shown herein may be wholly or partially implemented in computer instructions that are stored in a storage of the device and executable by the processor system.

The processor system may comprise one or more processor circuits, e.g., microprocessors, CPUs, GPUs, etc. Devices 110 and 120 may comprise multiple processors. A processor circuit may be implemented in a distributed fashion, e.g., as multiple sub-processor circuits. For example, devices 110 and 120 may use cloud computing.

Typically, the prover device 110 and the verifier device 120 each comprise one or more microprocessors which execute appropriate software stored at the device; for example, that software may have been downloaded and/or stored in a corresponding memory, e.g., a volatile memory such as RAM or a non-volatile memory such as Flash.

Instead of using software to implement a function, the devices 110 and 120 may, in whole or in part, be implemented in programmable logic, e.g., as fieldprogrammable gate array (FPGA). The devices may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, devices 110 and 120 may comprise circuits, e.g., for cryptographic processing, and/or arithmetic processing.

In hybrid embodiments, functional units are implemented partially in hardware, e.g., as coprocessors, e.g., cryptographic coprocessors, and partially in software stored and executed on the device.

**Figure 1b** schematically shows an example of an embodiment of proving system 102. System 102 may comprise multiple prover devices and/or verifier devices; shown are prover device 110 and verifier device 120.

The devices are connected through a computer network 172, e.g., the Internet. The prover device 110 and verifier device 120 may be according to an embodiment.

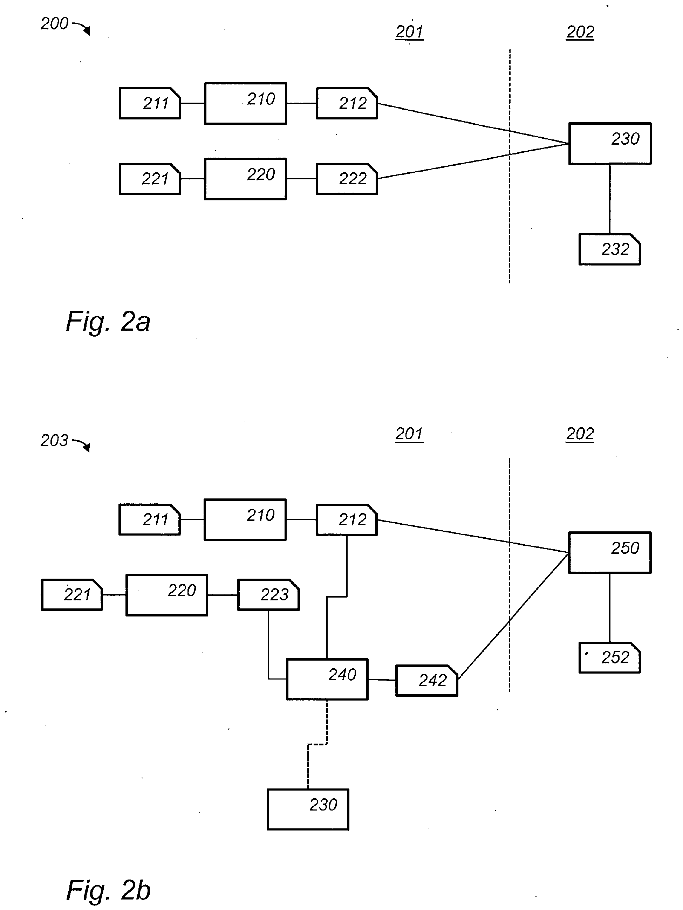

**Figure 2a** schematically shows an example of a proving system. Interestingly, the proving system of figure 2a may comprise a conventional proving system. In particular, the proving system of figure 2a does not comprise computing a zero-knowledge second proof according to a non-interactive zero knowledge scheme, as is further discussed below.

Shown in figure 2a is a prover device 201 and a verifier device 202.

Prover device 201 is configured with a base polynomial commitment scheme, including a base commitment function 210, and a base proof function 220. Many such polynomial commitment schemes are known. To commit to a polynomial 211, prover device 201 applies the base commitment function 210 to obtain a base commitment string 212 and sends it to verifier device 202. Later prover device 201 may need to demonstrate that polynomial 211 has certain properties, e.g., that it evaluates to a certain value for a certain input, e.g., function argument 221.

To do so, prover device 210 applies base proof function 220 to the argument 221 and, possibly, commitment string 212, to obtain a base evaluation proof 222. Proof 222 is also sent to verifier device 202.

Once verifier device 202 has the base commitment function 210 and the base evaluation proof 222 it can verify using a base verification equation 230 that the proof is correct. The equation may then result in a verification result 232, which may be a binary yes/no value, e.g., the proof is correct or not. The proof may reveal to verifier 202 the value of polynomial 211 at argument 221.

**Figure 2b** schematically shows an example of an embodiment of a proving system 203. System 203 modifies system 200 to address possible shortcomings in the base proof function 220. For example, verifier 202 is no longer provided with base proof 222.

Although base commitment function 210 may be knowledge sound, the base evaluation proofs produced by proof function 220 may have one or more of several undesirable properties. For example, the base evaluation proofs may not be simulation-extractable. For example, the base evaluation proofs may be malleable. For example, the base evaluation proofs may not be zero-knowledge. A construction is provided which addresses one or more of these problems.

Shown in figure 2b is a prover device 201 and a verifier device 202. Prover device 201 is configured for cryptographically committing to a polynomial, and for proving to a verifier an evaluation of the polynomial.

As in figure 2a, prover device 201 is provided with a base polynomial commitment scheme (PCS) comprising a base commitment function 210 and a base proof function 220. These two functions are associated with a base verification equation 230. Different from figure 2a though, the base verification equation 230 need not be used by verifier device 202. Nevertheless, as in figure 2a, the base commitment function 210 is configured to generate a base commitment string for a given polynomial, and base proof function 220 is configured to generate a base evaluation proof showing that the committed-to polynomial evaluates to a given function value at a given function argument.

Indeed, if one had access to a proof generated by function 220 then one could use base verification equation 230 to verify the proof for the corresponding commitment string. However, verifier 202 will typically not have access to the proof generated by function 220.

Three phases can be identified: a commitment phase, in which prover 210 commits to a particular polynomial 211; a proving phase, in which prover 210 generates a proof 242 for the assertion that polynomial 211 evaluates to a particular value for a particular argument 221; a verification phase, in which verifier 202 verifies proof 242 and becomes convinced of the assertion. The three phases necessarily follow each other in time, however, in applications, there may be multiple polynomials that prover device 201 commits to and proof values for. The phases of the multiple polynomials may wholly or partially overlap with each other and may or may not be in sync with each other.

**Commitment phase**

In the commitment phase, prover device 201 obtains a polynomial 211. This polynomial may come from another cryptographic algorithm which may call prover device 201 as a subroutine. The polynomial may be generated by prover device 201, or may be received from yet another source.

Using base commitment function 210, a base commitment string for the obtained polynomial 212 is generated. Base commitment string 212 is provided to verifier device 202. Note that knowledge of a commitment does not allow verifier device 202 to reconstruct polynomial 211.

The base commitment function may be configured for the base commitment string to have a length which is sublinear in the number of variables of the polynomial, and/or in the variable-degree of the variables in the polynomial. This is an advantageous property since it will cause only limited increase in the size of the base commitment string even if the number of variables and/or the variable-degree of the variables increases. This extends the number of applications in which proving system 203 may be applied.

A conventional base commitment function may be used. It proved an advantageous choice to use group elements to construct commitment string from. For example, in an embodiment the commitment string comprises one or more group elements in one or more groups, e.g., a pair of groups ($\mathbb{G}$, $\widehat{\mathbb{G}}$). A bilinear map may be defined for the tuple of group elements. A bilinear map has the advantage that group computations can be performed blinded in the exponents of group generator(s).

For example, the base evaluation proofs generated by base proof function 220 may likewise comprise one or more group elements in the one or more groups, e.g., pair of groups ($\mathbb{G}$, $\widehat{\mathbb{G}}$). Base verification equation 230 (although not directly used by device 202) may comprise the computation of a product of one or more group elements in a further group ( $\mathbb{G}_T$ ), wherein the one or more group elements are obtained by applying a bilinear map to group elements in the commitment string and/or base evaluation proof.

Proving device 201 provides verifier device 202 with the commitment string 212. This could possibly happen together with other information, e.g., as part of another protocol.

**Proving phase**

Later in the proving phase, it may become necessary for prover device 201 to reveal some information about polynomial 211, but not reveal the full polynomial 211. In particular, prover device 201 may want to convince verifier device 202 that polynomial 211 evaluates to a particular value for a particular argument 221.

For example, prover device 201 may obtain function argument 221 for the polynomial 211 from a number of sources, e.g., as an input from a further protocol, received from an external source, generated by prover device 201. Argument 221 may also be received from verifier device 202.

Prover device 201 proceeds with computing a first proof 223. First proof 223 comprises a base evaluation proof obtained using the base proof function 220. First proof 223 may be identical to proof 222 which would have been obtained in system 200. First proof 223 would show that polynomial 211 evaluates to a function value at function argument 221; however, first proof 223 need not be provided to verifier 202. A base proof function may be used that generates base evaluation proofs that have a length which is sublinear in the total degree of the polynomial.

Instead, prover 201 computes a zero-knowledge second proof according to a non-interactive zero knowledge (NIZK) scheme, by applying a further proof function 240. Further proof function 240 creates a second proof 242 that proves that prover 201 is in possession of a value 212 which would satisfy base verification equation 230 for the base commitment string 212. In other words, rather than providing proof 223 to verifier 202 that would convince verifier device 202 directly, a proof 242 is generated that proofs to verifier 202 that prover 201 is in possession of such a proof-without revealing it. This is indicated in figure 2b by connecting verification equation 230 with a dashed line to proof function 240, although proof function 230 need not be explicitly used.

The second proof 242 is then provided verifier device 202.

Examples of proofs that demonstrate possession of a value having certain properties are indicated herein. For example, the NIZK scheme may comprise a $\Sigma$-protocol proving knowledge of a homomorphism pre-image. For example, the homomorphism pre-image may be a discrete log. For example, the NIZK scheme may comprise a Schnorr protocol. Though a Schnorr protocol is preferable, it is also possible for the NIZK scheme to comprise a simulation-extractable version of a Groth-Sahai proof. For example, Groth-Sahai proofs may be modified with the method of [23] to make them simulation-extractable and address their inherent malleability.

**Verification phase**

Once verifier device 202 has both the proof 242 and commitment 212, it can verify that the base commitment string and the second proof satisfy a verification equation 250 according to the NIZK scheme. Verification equation 250 produces a result 252, which, like result 242, may be a binary yes/no value indicating if proof 242 is correct for commitment string 212. Prover device 201 may be said to reveal the value of the polynomial for the argument.

Accordingly, verification device 202 is convinced that prover device 201 has a proof that shows that polynomial 211 evaluates to a particular value for a particular argument. The particular value and/or particular argument may be provided separately by prover device 201 or may also be otherwise obtained by verifier device 202. They may also follow from the proof 242.

A polynomial commitment scheme is useful in itself and as a building block for various other cryptographic applications.

For example, in an embodiment, a prover 201 may desire to prove to verifier 202 that it has knowledge of a witness w for some statement x such that R (x, w) = 1 for an NP relation R. Herein R may be any NP language. For example, prover 201 may know the solution w to a traveling salesperson problem x, and may wish to convince verifier device 202 of this, without revealing witness w. Any other NP relation may be used, noting that class P of polynomial languages is a subset of NP.

To prove knowledge of a witness w, a SNARK method may be used. The SNARK method comprises a commitment phase and proof phase according to an embodiment for a set of polynomials associated with relation *R*. The set of polynomials may comprise a plurality of polynomials.

For example, the set of polynomials may be derived from the relation *R* by a polynomial oracle proof. Prover 201 may now commit to the polynomials in the set, by committing to them individually. The commitments are sent to verifier device 202. Prover device 201 now receives from verifier device 202 a set of function arguments for the set of polynomials. Prover device reveals the values of the evaluations and provides proof that the evaluations correspond to the committed-to polynomials. Verifier 202 can verify the evaluations and become confident that the polynomials both reflect relationship R, and that prover device 201 is possession of witness *w*.

Although any NP relation may be used, of which there are many, a particular advantageous application is verifiable computation. If a resource-constrained client wants to outsource expensive computations to a server, it is useful to have a way for the client to verify that the server is sending the correct result in a more efficient way than by having the client re-doing the computation itself.

Herein, prover 201 has done a computation and wants to convince verifier 202 that the computation was performed correctly. In this case, a relationship R may be defined between the computation to be performed *X,* and the result *Y.* The prover device may perform the computation, obtain result Y, and generate a proof of knowledge of result Y, for a relation R(X,Y) which relation indicates that Y is the correct output for input X for the outsourced computation.

For example, one can model the correctness of the computation as an arithmetic circuit taking as input a pair (X,Y), where X is the input of the computation and Y is the stated result. Then, the arithmetic circuit outputs 0 if and only if Y is the correct output. One can handle non-deterministic computation by defining an NP relation as the set of pairs (x,w) where the statement x=(X,Y) is the input-output pair of the computation and the witness w contains the randomness involved in the computation, together with the values of internal wires of the arithmetic circuit leading to the output 0.

Interestingly, in an embodiment, the verification time and the proof size is poly-logarithmic in the size of the arithmetic circuit describing the computation.

The computation may for example, be received from the verifier device itself, as an outsourced computation request. The outsourced computation may also originate elsewhere.

One example of expensive computation is the homomorphic evaluation of Fully homomorphic encrypted (FHE) data, including the bootstrap, and the client wants to be convinced that homomorphic evaluations are done correctly. In an embodiment, the bootstrap is deterministic and, in this case, the witness of the NP relation need only contain the internal wire values of the arithmetic circuit since there is no randomness. Still, it makes sense to use a SNARK to convince a client that it is receiving the correct result as long as the verification cost of the SNARK is smaller than computing an FHE-evaluation. See for example, the paper "Verifiable Fully Homomorphic Encryption", by Alexander Viand, Christian Knabenhans, and Anwar Hithnawi, included herein by reference. For an example of FHE data, and of an FHE computation, see, e.g., "Programmable Bootstrapping Enables Efficient Homomorphic Inference of Deep Neural Networks", by Ilaria Chillotti, Marc Joye, and Pascal Paillier, included herein by reference.

There are other applications for polynomial commitments. One of them is verifiable secret sharing. The paper "Polynomial Commitments", by Aniket Kate, Gregory M. Zaverucha, and Ian Goldberg, included herein by reference, provides additional applications, in addition to providing examples of a PCS.

Further embodiments and variants are provided below. Furthermore, more mathematically developed embodiments are provided. These additional examples are indicated to further inform but not to restrict the disclosure.

**Notations.** In the following, when $\ell$ is an integer, $[\ell]$ stands for the set $\{1, ..., \ell\}$. We denote by $\mathbb{Z}_p^{(\leq d)}[X]$ the set of polynomials of degree at most $d \in \mathbb{N}$ with coefficients in $\mathbb{Z}_p$. In the case of $\ell$-variate polynomials, we denote by $\mathbb{Z}_p^{(\leq d)}[X_1, ..., X_\ell]$ the set of polynomials that have degree $\leq d$ in each variable.

**Bilinear maps.** Let ($\mathbb{G}$, $\widehat{\mathbb{G}}$, $\mathbb{G}_T$) be cyclic groups of order $p$ that are equipped with a bilinear map (a.k.a. "pairing") $e: \mathbb{G} \times \widehat{\mathbb{G}} \to \mathbb{G}_T$ (meaning that $e(g^a, \hat{g}^b) = e(g, \hat{g})^{ab}$ for all $a, b \in \mathbb{Z}$) which is non-degenerate (e.g., $e(g, \hat{h}) = 1_{\mathbb{G}_T}$ if and only if $\hat{h} = 1_{\widehat{\mathbb{G}}}$ or $g = 1_{\mathbb{G}}$).

In pairing-friendly groups, we rely on the hardness of computing a discrete logarithm $\alpha \in \mathbb{Z}_p$ given $\{g^{\alpha^i}\}_{i \in [2n]}$ and $\{\hat{g}^{\alpha^i}\}_{i \in [n]}$. For this we may choose a sufficiently large group order $p = |\mathbb{G}| = |\widehat{\mathbb{G}}| = |\mathbb{G}_T| > 2^{l(\lambda)}$, for some function $l: \mathbb{N} \to \mathbb{N}$ of the security parameter $\lambda$. For $\lambda = 128$, we need at least $p > 2^{256}$.

Let ($\mathbb{G}$, $\widehat{\mathbb{G}}$, $\mathbb{G}_T$) be asymmetric bilinear groups of prime order $p$. For integers $m, n$, the (***m, n***)-**Discrete Logarithm** (($m, n$)-DLOG) problem is, given $(g, g^\alpha, g^{(\alpha^2)}, g^{(\alpha^m)}, \hat{g}, \hat{g}^\alpha, ... , \hat{g}^{(\alpha^n)})$ where $\alpha \xleftarrow{R} \mathbb{Z}_p, g \xleftarrow{R} \mathbb{G}, \hat{g} \xleftarrow{R} \widehat{\mathbb{G}}$, to compute $\alpha \in \mathbb{Z}_p$. In practice, $\mathbb{G}$ and $\widehat{\mathbb{G}}$ may be instantiated from elliptic curves groups while $\mathbb{G}_T$ may be a subgroup of the group of invertible elements in a finite field. Examples of such groups are given in [25, 13, 2]. As explained in [20], one can distinguish three types of pairings. In Type-1 pairings, we have $\widehat{\mathbb{G}} = \mathbb{G}$. In Type-2 and Type-3 pairings, we have $\widehat{\mathbb{G}} = \mathbb{G}$, and they differ in that Type-2 pairings admit an efficiently computable isomorphism $\psi: \widehat{\mathbb{G}} \to \mathbb{G}$ (but not in the converse direction) whereas no such isomorphism is known for Type-3 pairings. Type-3 pairings offer the most efficient configuration. An up-to-date overview of the status of pairing-friendly groups is given in [3].

**Non-interactive proof systems**

A non-interactive zero-knowledge (NIZK) argument system comprises an algorithm (*CRS - Gen, Prove, Verify*) with the following specifications. On input of a security parameter $\lambda \in \mathbb{N}$ and (optionally) other parameters, *CRS - Gen* generates a common reference string pp, which may have a special algebraic structure, in which case it is called *structured reference string* (SRS). Algorithm *CRS - Gen* also outputs a simulation trapdoor $\tau$ (which can be used by the zero-knowledge simulator but should be hidden to all parties in the real scheme). Algorithm *Prove* takes as input the common reference string pp, a statement *x* and a witness *w* and outputs a proof $\pi$; *Verify* takes as input pp, a statement *x* and a proof $\pi$ and returns 0 or 1. Correctness requires that proofs honestly generated by the prover are always (or at least with overwhelming probability) accepted by the verifier.

From a security point of view, NIZK argument systems should satisfy two properties. The *zero-knowledge* property requires that proofs leak no information about the witness. This is formalized by asking that the trapdoor $\tau$ (hidden in pp) allows simulating proofs that are (statistically or computationally) indistinguishable from real proofs. The *knowledge soundness* property requires that there exists an extractor that can compute a witness whenever the adversary generates a valid proof. The extractor has access to the adversary's internal state, including its random coins. In a NIZK argument for a relation *R*, these properties are defined below.

In the syntax, we also assume that the prover and the verifier both take as input (besides the statement) a label lbl, which is a public string that should be non-malleably bound to the statement and the proof (but is not involved in the proven relation itself).

Completeness: For any $\lambda \in \mathbb{N}$, any statement-witness pair $(x, w) \in R$, and any label lbl, we have

$$\Pr[Verify_{\text{pp}}(x, \pi, \text{lbl}) = 1 | (\text{pp}, \tau) \leftarrow CRS - Gen(1^\lambda),$$

$$\pi \leftarrow Prove_{\text{pp}}(x, w, \text{lbl})] = 1 - \text{negl}(\lambda)$$

for some negligible function negl: $\mathbb{N} \to \mathbb{N}$.

Knowledge Soundness: For any PPT adversary $\mathcal{A}$, there is a PPT extractor $\mathcal{E}_{\mathcal{A}}$ that has access to $\mathcal{A}$'s internal state and random coins $\rho$ such that

$$\Pr[Verify_{\text{pp}}(x, \pi, \text{lbl}) = 1 \land (x, w) \notin R \mid (\text{pp}, \tau) \leftarrow CRS -$$

$$Gen(1^\lambda),$$

$$(x, \pi, \text{lbl}) \leftarrow \mathcal{A}(\text{pp}; \rho), \ w \leftarrow \mathcal{E}_{\mathcal{A}}(\text{pp}, (x, \pi, \text{lbl}), \rho)] = \text{negl}(\lambda).$$

(Statistical) Zero-knowledge: There exists a PPT simulator *Sim* such that, for any $\lambda \in \mathbb{N}$, any pair $(x, w) \in R$, and any label lbl, the distributions $D_0 = \{\pi \leftarrow Prove_{pp}(x, w, \text{lbl}): (\text{pp}, \tau) \leftarrow CRS - Gen(1^\lambda)\}$ and $D_1 = (\pi \leftarrow Sim(\text{pp}, \tau, x, \text{lbl}): (\text{pp}, \tau) \leftarrow CRS - Gen(1^\lambda)\}$ are statistically close.

For many applications, it is desirable to consider an adversary that can observe simulated proofs (for possibly false statements) and exploit some malleability of these proofs to generate a fake proof of its own. To prevent such attacks, the notion of simulation-extractability strengthens knowledge soundness by giving the adversary access to a simulation oracle.

Simulation-Extractability: For any PPT adversary $\mathcal{A}$, there is a PPT extractor $\mathcal{E}_\mathcal{A}$ that has access to $\mathcal{A}$ 's internal state/randomness $\rho$ such that

$$\Pr[Verify_{\mathrm{pp}}(x, \pi, \mathrm{lbl}) = 1 \ \wedge \ (x, w) \notin R \ \wedge \ (x, \pi, \mathrm{lbl}) \notin Q |$$

$$(\mathrm{pp}, \tau) \leftarrow CRS - Gen(1^\lambda), (x, \pi, \mathrm{lbl}) \leftarrow \mathcal{A}^{SimProve}(\mathrm{pp}; \rho),$$

$$w \leftarrow \mathcal{E}_\mathcal{A}(\mathrm{pp}, (x, \pi, \mathrm{lbl}), \rho, Q)] = \mathrm{negl}(\lambda),$$

where SimProve(pp, $\tau, \cdot, \cdot$) is an oracle that returns a simulated proof $\pi \leftarrow \mathrm{Sim}(\mathrm{pp}, \tau, x, \mathrm{lbl})$ for a given statement-label pair ($x$, lbl) and $Q = \{(x_i, \pi_i, \mathrm{lbl}_i)\}_i$ denotes the set of queried statements and the simulated proofs returned by *SimProve.*

In the following, we extend the syntax with an algorithm *Com* that inputs a vector $\mathbf{x} \in D^n$ over a domain $D$ and outputs a commitment $C$.

**Polynomial Commitments**

We first recall the syntax of polynomial commitments, as introduced in [26]. We restrict ourselves here to polynomials defined over a large prime field (e.g., for a prime larger than $2^{256}$) and where the evaluation protocol is non-interactive.

A polynomial commitment scheme (PCS) $\Gamma$ = (CRS - Gen, Com, Prove, Verify) may be a tuple of (possibly randomized) algorithms, comprising one or more of:

CRS - Gen inputs a security parameter and (optionally) the number f of variables and an upper bound $d$ on the degree of committed polynomials in each variable. It outputs a common reference string pp that specifies the field $\mathbb{F}$ for which committed polynomials live in $\mathbb{F}^{(\leq d)}[X_1, \ldots, X_\ell]$. The reference string pp is implicitly taken as input by all other algorithms hereunder.

Com$_{\mathrm{pp}}$ is a (possibly randomized) algorithm that takes in a polynomial $f \in \mathbb{F}^{(\leq d)}[X_1, \ldots, X_\ell]$ and outputs a commitment $C$ to $f$, together with the state information aux allowing to open $C$. We assume that aux contains the randomness allowing to compute the commitment $C$.

Prove$_{\mathrm{pp}}$ is a (possibly randomized) algorithm that inputs a commitment $C$ together with the corresponding state information aux, an input $\mathbf{z} \in \mathbb{F}^\ell$ and an output $y \in \mathbb{F}$. If $y = f(\mathbf{z})$, it outputs a proof $\pi$ that $y = f(\mathbf{z})$. If $y \neq f(\mathbf{z})$, it returns 1.

Verify$_{\mathrm{pp}}$ is a (usually deterministic) algorithm that inputs a commitment $C$, an input $\mathbf{z} \in \mathbb{F}^\ell$, a claimed output $y \in \mathbb{F}$, and a candidate proof $\pi$. It outputs 0 or 1.

A PCS is called *succinct* if the size of commitments C and evaluation proofs $\pi$ grows at most logarithmically with the degree $d$ of committed polynomials.

In terms of security, the construction of SNARKs requires a PCS satisfying a notion of knowledge-soundness, which is formalized in the same way as for general arguments. A PCS is **knowledge-sound** if, for any CRS pp generated by CRS - Gen($1^\lambda, 1^\ell, 1^d$), Eval is a non-interactive argument of knowledge for the relation

$$\mathcal{R}_{\mathrm{Eval}}(\mathrm{pp}, 1^\ell, 1^d) := \{((\underbrace{C, y, \mathbf{z}}_{\triangleq x}), (\underbrace{f, \mathrm{aux}}_{\triangleq w})) : f \in \mathbb{Z}_p^{(\leq d)}[X_1, \ldots, X_\ell]$$

$$\wedge \ f(\mathbf{z}) = y \ \wedge \ C = \mathrm{Com}_{\mathrm{pp}}(f; r)\}$$

where r is the randomness contained in aux.

In some applications, it is useful to have schemes where the Prove algorithm additionally convinces the verifier that the committed polynomial has small degree (as done in, e.g., in [28]). In this case, the Verify algorithm additionally takes as input an upper bound d on the degree and returns 1 if it is convinced that $y = f(\mathbf{z})$ and $f$ has degree $\leq d$. Then, the knowledge-soundness definition is modified accordingly, by including $d$ in the statement $x$.

A weaker security notion is called *evaluation-binding* which captures the adversary's inability to prove two distinct evaluations of a committed polynomial on a given input. For the purpose of constructing SNARKs from polynomial IOPs, the stronger knowledge-soundness property is necessary (as mentioned in [7]).

In order to build *zero-knowledge* SNARKs, it is useful to have PCS constructions satisfying the hiding property. A PCS is **hiding** if, for any PPT adversary $\mathcal{A} = (\mathcal{A}_0,$

$$|\Pr[b' = b \colon \mathrm{pp} \leftarrow \mathrm{CRS} - \mathrm{Gen}(1^\lambda, 1^\ell, 1^d); \ (st, f_0, f_1) \leftarrow \mathcal{A}_0(\mathrm{pp});$$

$$b \xleftarrow{R} \{0,1\}; C \leftarrow \mathrm{Com}_{\mathrm{pp}}(f_b); b' \leftarrow \mathcal{A}_1(st, C)] - 1/2| \leq \mathrm{negl}(\lambda)$$

A PCS is zero-knowledge if its evaluation protocol Eval is zero-knowledge. In the case of a non-interactive Eval, there is a simulator that can use a trapdoor hidden in pp to simulate proofs without using witnesses. To achieve zero-knowledge, it is necessary (but not sufficient) to have a randomized commitment algorithm.

The notion of simulation-extractability is also formalized for PCS in the same way as in general succinct NIZK arguments.

We give a method allowing to construct randomized polynomial commitments allowing to commit to multi-variate and univariate polynomials. The commitment should be hiding, meaning that its commitment algorithm must be probabilistic. In addition, we want the evaluation protocol to be zero-knowledge, meaning that each proof leaks nothing but the correctness of claimed evaluations.

In order to use them to build simulation-extractable SNARKs, we also require that proofs be non-randomizable (e.g., it should be infeasible to create a new proof for an already proven evaluation $y = f(x)$). In [27], this property was called "quasi-uniqueness". We actually want a stronger non-malleability property (e.g., simulation-extractability). In particular, this property should prevent an adversary observing a commitment $C$ and a proof $\pi_x$ of for evaluation $y = f(x)$ from creating a modified commitment $C'$ for a related evaluation $y' = f'(x')$ where $(f', x', y')$ are meaningfully related to $(f, x, y)$.

In terms of efficiency, we also want the structured common reference string (SRS) to be as short as in the deterministic version of the corresponding commitment (e.g., the deterministic KZG scheme in the univariate KZG [26] or the PST commitment [32] in the case of Zhang *et al.*'s commitment). Finally, in the case of univariate polynomials, we want to keep the number of pairing evaluations small since pairing evaluations can be relatively costly.

The method can be applied to any randomized PCS (e.g., the commitment algorithm should be probabilistic) for f-variate polynomials $f \in \mathbb{F}_p[X_1, \ldots, X_\ell]$ defined over a prime field $\mathbb{F}_p$ and making use of cyclic groups $(\mathbb{G}, \widehat{\mathbb{G}}, \mathbb{G}_T)$ of order $p$ equipped with a bilinear map $e \colon \mathbb{G} \times \widehat{\mathbb{G}} \to \mathbb{G}_T$, where:

- The (possibly structured) common reference string pp contains generators $(g_1, \ldots, g_{n_1}) \in \mathbb{G}^{n_1}$, $(\hat{g}_1, \ldots, \hat{g}_{n_2}) \in \widehat{\mathbb{G}}^{n_2}$, where integers $n_1, n_2$ may depend on the number $\ell$ of variables and the maximal degree $d$ in each variable;

- A commitment $C = (\mathbf{C}_1, \mathbf{C}_2)$ to an $\ell$-variate $f[X_1, \ldots, X_\ell] \in \mathbb{F}_p^{(\leq d)}[X_1, \ldots, X_\ell]$ comprising the group elements

$$\mathbf{C}_1 = (C_1, \ldots, C_{m_1}) \in \mathbb{G}^{m_1}, \qquad \mathbf{C}_2 = (\hat{C}_1 \ldots, \hat{C}_{m_2}) \in \widehat{\mathbb{G}}^{m_2},$$

where $m_1, m_2$ are sublinear in $\ell$ and the variable-degree $d$;

- An evaluation proof for an output $y = f(\mathbf{z}) \in \mathbb{F}_p$ and an input $\mathbf{z} \in \mathbb{F}_p^\ell$ comprising the scalars

$$\boldsymbol{\gamma} = (\gamma_1, \ldots, \gamma_k) \in \mathbb{F}_p^k,$$ for some constant $\tau$, and group elements

$$\boldsymbol{\pi}_1 = (\pi_1, \ldots, \pi_{\ell_1}) \in \mathbb{G}^{\ell_1}, \ \boldsymbol{\pi}_2 = (\hat{\pi}_1, \ldots, \hat{\pi}_{\ell_2}) \in \widehat{\mathbb{G}}^{\ell_2}$$

, where $\ell_1$, $\ell_2$ are functions of the number of variables -P;

- The verification equation is of the form

$$F(\mathrm{pp}, \mathbf{C}_1, \mathbf{C}_2, y, d) = g_T^{f_T(\boldsymbol{\gamma})} \cdot \prod_{\tau=1}^{\ell_1} e(\pi_\tau, \hat{F}_\tau(\mathrm{pp}, \mathbf{z})) \prod_{\tau=1}^{\ell_2} e(F_\tau(\mathrm{pp}, \mathbf{z}), \hat{\pi}_\tau) \qquad (8)$$

wherein

- $F$ is a publicly computable function that ranges over $\mathbb{G}_T$ and takes as input the common reference string pp, the commitment $(\mathbf{C}_1, \mathbf{C}_2)$, a claimed evaluation $y \in \mathbb{F}_p$ and (optionally) a degree bound $d$;

- $g_T \in \mathbb{G}_T$ is publicly computable from the common reference string pp;

- $f_T \colon \mathbb{F}_p^k \to \mathbb{F}_p$ is a linear function of $\boldsymbol{\gamma} = (\gamma_1, \ldots, \gamma_k) \in \mathbb{F}_p^k$, $\hat{F}_1, \ldots, \hat{F}_{\ell_1} \colon \mathbb{G}^{n_1} \times \widehat{\mathbb{G}}^{n_2} \times \mathbb{F}_p^\ell \to \mathbb{F}_p$, and $F_1, \ldots, F_{\ell_2} \colon \mathbb{G}^{n_1} \times \widehat{\mathbb{G}}^{n_2} \times \mathbb{F}_p^\ell \to \mathbb{F}_p$ are publicly computable functions of the group elements contained in pp and the input $\mathbf{z} \in \mathbb{F}_p^\ell$;

The linearity condition of $f_T$ is only necessary if knowledge of a pre-image is proven using a $\Sigma$-protocol (for example, a Schnorr-based protocol [34]).

The method also extends to polynomials defined over a ring $\mathbb{Z}_N$, for a composite integer $N$, as long as factoring $N$ is infeasible. In this case, $\mathbb{Z}_N$ is not a field but finding a non-invertible element is hard assuming that factoring N is infeasible. For practical applications, it thus essentially behaves as a field. However, this would require pairings defined over cyclic groups of composite order $N$, which are less efficient than pairings over prime-order groups since the group order should be large enough (e.g., at least $N > 2^{2048}$ or even $N > 2^{3072}$) to resist known factorization algorithms. Applications preferably use a prime field since pairings over composite-order groups are expensive.

From a security point of view, we prefer that the PCS scheme provides knowledge-soundness in the algebraic group model. In addition, its commitment algorithm should be randomized in such a way that the distribution of

$$C = (\mathbf{C}_1, \mathbf{C}_2) = ((C_1, \ldots, C_{m_1}), (\hat{C}_1 \ldots, \hat{C}_{m_2})) \in \mathbb{G}^{m_1} \times \widehat{\mathbb{G}}^{m_2}$$

statistically hides the committed polynomial.

However, we do *not* require evaluation proofs $\pi$ to be zero-knowledge in the initial scheme. For example, it could be that $\boldsymbol{\gamma} \in \mathbb{F}_p^k$ leaks some information about the committed polynomial $f[X_1, \ldots, X_\ell]$ contained in C. One of the embodiments starts from an initial PCS where a single evaluation proof leaks the commitment's randomness. Still, the construction described herein turns it into a hiding PCS with zero-knowledge evaluation proofs.

We now give a transformation that turns the initial PCS satisfying the above conditions into a simulation-extractable PCS. The common reference string is identical to that of the initial PCS, except that we introduce a hash function $H \colon \{0,1\}^* \to \mathbb{F}_p$ modeled as a random oracle in order to apply the Fiat-Shamir transform [16]. The commitment algorithm also remains identical. The only changes are in the Prove and Verify algorithms. At a high level, instead of revealing the proof $\pi = (\gamma, \pi_1, \pi_2)$ as it is, we prove knowledge of a proof $\pi$ satisfying (8). By exploiting the linearity properties of the verification equation (8), we can do this efficiently using a Schnorr-like $\Sigma$-protocol [34]. An alternative would be to apply Groth-Sahai proofs [22] but their proofs are generally less efficient. Also, their proofs are inherently randomizable and their simulation-extractable variants [23, 9] come with some overhead.

*Prove$_{pp}$(C, **z**, y, aux))*: Given a commitment $C = (\mathbf{C}_1, \mathbf{C}_2)$, a witness aux comprising the committed polynomial and the randomness used to compute C, an input $\mathbf{z} \in \mathbb{F}_p^{\ell}$ and an output $y = f(\mathbf{z}) \in \mathbb{F}_p$, return 1 if $y \neq f(\mathbf{z})$. Otherwise, do the following:

- Compute a proof $\boldsymbol{\pi} = (\boldsymbol{\gamma}, \boldsymbol{\pi}_1, \boldsymbol{\pi}_2) \in \mathbb{F}_p^k \times \mathbb{G}^{\ell_1} \times \widehat{\mathbb{G}}^{\ell_2}$ satisfying (8).

- Generate a NIZK proof of knowledge $\pi_K$ of $(\boldsymbol{\gamma}, \boldsymbol{\pi}_1, \boldsymbol{\pi}_2) \in \mathbb{F}_p^k \times \mathbb{G}^{\ell_1} \times \widehat{\mathbb{G}}^{\ell_2}$ satisfying

$$F(\text{pp}, \mathbf{C}_1, \mathbf{C}_2, y, d) = g_T^{f_T(\boldsymbol{\gamma})} \cdot \prod_{\tau=1}^{\ell_1-1} e(\pi_\tau, \hat{F}_\tau(\text{pp}, \mathbf{z})) \qquad (9)$$

$$\cdot \prod_{\tau=1}^{\ell_2} e(F_\tau(\text{pp}, \mathbf{z}), \hat{\pi}_\tau),$$

(where $\gamma$, $\pi_\tau$, $\hat{\pi}_\tau$, are witnesses).

Return the proof $\pi_K$.

*Verify$_{pp}$(C,y,z,π)*: Given a commitment $C = (\mathbf{C}_1, \mathbf{C}_2) \in \mathbb{G}^{\ell_1} \times \widehat{\mathbb{G}}_2^{\ell_2}$, an input $\mathbf{z} \in \mathbb{F}_p^{\ell}$, a claimed evaluation $y \in \mathbb{F}_p$, and a candidate proof $\pi_K$, return 0 if the latter does not verify as a valid proof of knowledge of witnesses $(\gamma, \pi_1, \pi_2) \in \mathbb{F}_p^k \times \mathbb{G}^{\ell_1} \times \widehat{\mathbb{G}}^{\ell_2}$ satisfying the relation (9).

The NIZK proof does not have to provide succinctness, e.g., its proof does not have to be shorter than the witness. For efficiency, it may be instantiated using a Schnorr-like Σ-protocol [34] and made non-interactive using the Fiat-Shamir heuristic, using a hash function $H: \{0,1\}^* \to \mathbb{F}_p$ modeled as a random oracle. Then, the resulting evaluation protocol is zero-knowledge even though the underlying basic PCS is not. Moreover, the resulting protocol is also simulation-extractable even if the initial PCS is not (it is only required to be knowledge-sound). Simulation-extractability is in fact inherited from the non-malleability properties of the Fiat-Shamir transform [15] in the random oracle model. We note that proving this is non-trivial since we aim to do it without rewinding.

Some existing variants of KZG commitments, see, e.g., [35], have the property that proofs are randomizable. Then, for each proof $\pi = (\gamma, \pi_1, \pi_2)$, the joint distribution of

$$((\pi_1, \ldots, \pi_{\ell_1-1}), (\hat{\pi}_1, \ldots, \hat{\pi}_{\ell_2}))$$

is uniform over $\mathbb{G}^{\ell_1-1} \times \widehat{\mathbb{G}}^{\ell_2}$ conditionally on the commitment C, the common reference string pp and even when $\gamma = (\gamma_1, \ldots, \gamma_k)$ are given. In this case, $(\pi_1, \ldots, \pi_{\ell_1-1}), (\hat{\pi}_1, \ldots, \hat{\pi}_{\ell_2})$ can be included in the proof of knowledge $\pi_K$ (instead of being part the secret witness) without affecting the zero-knowledge property. Then, the witness can just comprise $\gamma \in \mathbb{F}_p^k$ and $\pi_{\ell_1} \in \mathbb{G}$. In this case, $((\pi_1, \ldots, \pi_{\ell_1-1}), (\hat{\pi}_1, \ldots, \hat{\pi}_{\ell_2}))$ should be included among the inputs of the hash function H when we apply the Fiat-Shamir heuristic in order to prevent a malleability adversary from randomizing them.

In order to apply the different embodiments as components of higher-level protocol (typically, simulation-extractable SNARKs), we also append a public label lbl to each proof. The label lbl comprises public data that should be attached to the proof in a non-malleable way. For example, the label will typically contain the transcript of earlier protocol messages. In order to enforce this non-malleability property, lbl will be included in the inputs of the hash function when applying the Fiat-Shamir heuristic.

Below three exemplifying embodiments are disclosed with additional detail, and which also provide additional benefits.

First exemplifying embodiment

Our first exemplifying embodiment is a randomized version of univariate KZG commitments and allows committing to univariate polynomials in $\mathbb{Z}_p[X]$.

A commitment to a polynomial $f[X] = \sum_{i=0}^{d} f_i \cdot X^i$ is obtained by choosing $\gamma \xleftarrow{R} \mathbb{Z}_p$ and computing

$$C = g^\gamma \cdot \prod_{i=1}^{d+1} g_i^{f_{i-1}},$$

which we interpret as a deterministic KZG commitment $C = g^{F(\alpha)}$ to $F[X] = \gamma + X \cdot f[X]$. However, we use a different evaluation protocol in order to prove that $y = f(z)$ for a given input $z \in \mathbb{Z}_p$. Instead of masking $f[X]$ with a committed random polynomial $s[X]$, we prove knowledge of $\gamma \in \mathbb{Z}_p$ such that $C \cdot g^{-\gamma}$ is a commitment to a polynomial $F_0 \triangleq F[X] - \gamma = X \cdot f[X]$ for which $F_0(z) = z \cdot y$. Note that revealing $\gamma$ would not be zero-knowledge as it would break the hiding property of the commitment.

We also need to prove here that $F_0[X]$ has no degree-0 term (e.g., $F_0(0) = 0$), which is necessary to convince the verifier that C is really a deterministic KZG commitment to a polynomial of the form $F[X] = \gamma + X \cdot f[X]$. To this end, we may use the batch evaluation protocol of [26, Section 3.4] and prove that $F_0[X] - y \cdot X$ is divisible by $X \cdot (X - z)$ (note that $r[X] = y \cdot X$ is the unique degree-1 polynomial such that r(z) = z $\cdot$ y and r(0) = 0). In the evaluation protocol, the prover thus demonstrates knowledge of $(\gamma, \pi) \in \mathbb{Z}_p \times \mathbb{G}$ such that

$$e(C \cdot g^{-\gamma} \cdot g_1^{-y}, \hat{g}) = e(\pi, \hat{g}_2 \cdot \hat{g}_1^{-z})$$

which can be done using a standard $\Sigma$-protocol. The resulting NIZK proof comprises one element of $\mathbb{G}$ and two elements of $\mathbb{Z}_p$. In comparison, the technique described herein uses 3 elements of $\mathbb{G}$ and 3 elements of $\mathbb{Z}_p$ per proof.

*CRS - Gen*$(1^\lambda, 1^d)$: On input of a security parameter $\lambda$ and the maximal degree of committed polynomials $d \in poly(\lambda)$, do the following:

- Choose asymmetric bilinear groups $(\mathbb{G}, \widehat{\mathbb{G}}, \mathbb{G}_T)$ of prime order $p > 2^{l(\lambda)}$, for some function $l: \mathbb{N} \to \mathbb{N}$, and $g \xleftarrow{R} \mathbb{G}, \hat{g} \xleftarrow{R} \widehat{\mathbb{G}}$.

- Pick a random $\alpha \xleftarrow{R} \mathbb{Z}_p$ and compute $g_1, \dots, g_{d+1} \in \mathbb{G}$, where $g_i = g^{(\alpha^i)}$ for each i $\in$ [d + 1] and $\hat{g}_1 = \hat{g}^\alpha$, $\hat{g}_2 = \hat{g}^{(\alpha^2)}$.

- Choose a hash function $H: \{0,1\}^* \to \mathbb{Z}_p$ modeled as a random oracle.

The public parameters are defined to be

$$\text{pp} = \left( (\mathbb{G}, \widehat{\mathbb{G}}, \mathbb{G}_T), g, \{g_i\}_{i \in [d+1]}, \hat{g}, \hat{g}_1, \hat{g}_2, H \right)$$

*Com*$_{pp}(\mathbf{f})$ To commit to a polynomial $\mathbf{f}[X] = \sum_{j=0}^{d} f_j \cdot X^j \in \mathbb{Z}_p^{(\le d)}[X]$, R choose a random $\gamma \xleftarrow{R} \mathbb{Z}_p$ and compute

$$C = g^\gamma \cdot \prod_{j=1}^{d+1} g_j^{f_{j-1}}$$

Return the commitment string $C \in \mathbb{G}$ and the opening information aux = ($\gamma$, f) $\in$ $\mathbb{Z}_p \times \mathbb{Z}_p^{(\leq d)}[X]$.

*Prove*$_{pp}$ (*C, z, y,* aux, lbl)):given a commitment *C*, a witness aux = ($\gamma$, **f**), an input $z \in \mathbb{Z}_p^*$, an output $y = f(z) \in \mathbb{Z}_p$ and a label lbl, return $\perp$ if $y \neq f(z)$. Otherwise, do the following:

- Let polynomials $F[X] = X \cdot f[X] + \gamma$ and $F_0[X] = F[X] - \gamma$. Compute a batch proof $\pi$ that $F_0(z) = z \cdot y$ and $F_0(0) = 0$, which is obtained by computing q[X] = $\sum_{i=0}^{d-1} q_i \cdot X^i$ such that

$$\frac{F_0[X] - y \cdot X}{X \cdot (X - z)} = q(X)$$

and then

$$\pi = \prod_{i=0}^{d-1} g_i^{q_i} = g^{q(\alpha)}$$

Note that $\pi \in \mathbb{G}$ satisfies

$$e(C \cdot g_1^{-y}, \hat{g}) = e(g, \hat{g})^\gamma \cdot e(\pi, \hat{g}_2 \cdot \hat{g}_1^{-z}) \qquad (10)$$

- Generate a NIZK proof of knowledge of $(\gamma, \pi) \in \mathbb{Z}_p \times \mathbb{G}$ satisfying (10). Namely,

  * Choose $r_\gamma \xleftarrow{R} \mathbb{Z}_p, R_\pi \xleftarrow{R} \mathbb{G}$ and compute

$$R = e(g, \hat{g})^{r_\gamma} \cdot e(R_\pi, \hat{g}_2 \cdot \hat{g}_1^{-z})$$

  * Compute a challenge $c = H(\text{lbl}, C, y, z, R) \in \mathbb{Z}_p$.

  * Compute the response

$$s_\gamma = r_\gamma + c \cdot \gamma$$

$$S_\pi = R_\pi \cdot \pi^c$$

Return the proof

$$\pi = (c, s_\gamma, S_\pi) \in \mathbb{Z}_p^2 \times \mathbb{G}. \qquad (11)$$

*Verify*$_{pp}$(*C,y,z,$\pi$*,lbl): Given a commitment $C \in \mathbb{G}$, an input $z \in \mathbb{Z}_p^*$, a claimed evaluation $y \in \mathbb{Z}_p$, a label lbl, and a candidate proof $\pi$, return 0 if the latter does not parse properly as in (11). Otherwise,

- Compute

$$R = e(g, \hat{g})^{s_\gamma} \cdot e(S_\pi, \hat{g}_2 \cdot \hat{g}_1^{-z}) \cdot e(C \cdot g_1^{-y}, \hat{g})^{-c}. \qquad (12)$$

- Return 1 if $c = H(\mathrm{lbl}, C, y, z, R) \in \mathbb{Z}_p$ and 0 otherwise.

**Correctness**

The correctness of (12) follows from an application of $\Sigma$-protocols allowing to prove knowledge of homomorphism pre-images. In details the verifier computes

$$e(g, \hat{g})^{s_\gamma} \cdot e(S_\pi, \hat{g}_2 \cdot \hat{g}_1^{-z}) \cdot e(C \cdot g_1^{-y}, \hat{g})^{-c}$$
$$= e(g, \hat{g})^{r_\gamma + c \cdot \gamma} \cdot e(R_\pi \cdot \pi^c, \hat{g}_2 \cdot \hat{g}_1^{-z}) \cdot (e(g, \hat{g})^\gamma \cdot e(\pi, \hat{g}_2 \cdot \hat{g}_1^{-z}))^{-c}$$
$$= e(g, \hat{g})^{r_\gamma} \cdot e(R_\pi, \hat{g}_2 \cdot \hat{g}_1^{-z}) = R$$

where the first equality comes from (10).

**Efficiency**

We note that the prover does not have to compute any pairing as it can implicitly define $R_\pi$, as $R_\pi = g^{t_\pi}$ and compute

$$R = e(g, \hat{g})^{r_\gamma} \cdot e(g, \hat{g}_2)^{t_\pi} \cdot e(g, \hat{g}_1)^{-z \cdot t_\pi}$$

at step 2.a (note that $e(g, \hat{g}_2)$ and $e(g, \hat{g}_1)$ can be pre-computed) and $S_\pi = g^{t_\pi} \cdot \pi^c$ at step 2.c.

The verifier only needs to compute 3 exponentiations (regardless of the degree of the polynomial) and 2 pairings since $e(g, \hat{g})$ can be pre-computed. In comparison, a known scheme like [28] requires 3 pairing evaluations. However, the main advantage is that the scheme can be proven simulation-extractable (in the AGM+ROM model). In particular, it satisfies the quasi-uniqueness property of proofs required by the framework of [27]. If we plug it in the compiler of [27] (as a drop-in replacement of the randomized KZG), it shortens the CRS by a factor 2.

In terms of security, the zero-knowledge property holds in the random oracle model. The construction provides statistical zero-knowledge in the ROM.

In addition, the evaluation protocol of our modified KZG scheme provides simulation-extractability (which implies the milder "weak proof uniqueness" property that is needed in order to apply the framework of [27] to Plonk): Even if the adversary can observe proofs generated by the zero-knowledge simulator, it will be unable to create a convincing proof from which the knowledge extractor is unable to extract a valid witness.

Interestingly, the security proof does not rely on rewinding to extract witnesses. By adapting ideas from [18], our proof can exploit the features of the algebraic group model to perform straight-line extraction. Under the (d + 1,2)-DLOG assumption, the scheme provides simulation-extractability in the algebraic group model and in the random oracle model.

We note that the embodiment can easily be adapted to prove degree bounds. However, this variant loses the benefit of the shorter SRS (due to the need for $O(d)$ elements in $\widehat{\mathbb{G}}$ ).

Second exemplifying embodiment

In this embodiment, the commitment is turned into a simulation-extractable PCS. The resulting construction is almost as efficient as the consturction in [35]. Indeed, proofs are only longer by one element of $\mathbb{Z}_p$ and the verifier computes the same number of pairings and exponentiations.

In the description, we allow the committer to commit to polynomials where the actual number of variables $\mu$ may be smaller than the bound $\ell$ accounted for by the common reference string.

*CRS - Gen*($1^\lambda, 1^d, 1^\ell$): On input of a security parameter $\lambda$, a maximal number of variables $\ell$ and a degree d such that $(d + 1)^\ell \in \mathrm{poly}(A)$, generate the SRS as follows:

- Choose asymmetric bilinear groups ($\mathbb{G}$, $\widehat{\mathbb{G}}$, $\mathbb{G}_T$) of prime order $p > 2^{l(\lambda)}$, for some function $l: \mathbb{N} \to \mathbb{N}$ and $g \xleftarrow{R} \mathbb{G}, \hat{g} \xleftarrow{R} \widehat{\mathbb{G}}$.

- Pick $\alpha_1, \dots, \alpha_\ell, \alpha_r \xleftarrow{R} \mathbb{Z}_p$ and compute $\hat{g}_1, \dots, \hat{g}_\ell \in \mathbb{G}$, where $\hat{g}_i = \hat{g}^{\alpha_i}$ for each $i \in [\text{f}]$. Compute $g_r = g^{\alpha_r}$ and $\hat{g}_r = \hat{g}^{\alpha_r}$.

- For each

$$\mathcal{I} = (i_1, \dots, i_\ell) \in \mathcal{W}_{d,\ell}, \text{ compute } g_{\mathcal{I}} = g^{\prod_{j=1}^{\ell} \alpha_j^{i_j}}.$$

- Choose a hash function $H: \{0,1\}^* \to \mathbb{Z}_p$ that will be modeled as a random oracle.

The public parameters are defined to be

$$\mathrm{pp} = ((\mathbb{G}, \widehat{\mathbb{G}}, \mathbb{G}_T), g_r, \hat{g}_r, \{g_{\mathcal{I}}\}_{\mathcal{I} \in \mathcal{W}_{d,\ell}}, \{\hat{g}_i\}_{i \in [\ell]}, H)$$

*Com*$_{\text{pp}}$(f): To commit to a polynomial $f[X_1, \dots, X_\mu] \in \mathbb{Z}_p[X_1, \dots, X_\mu]$, for some $\mu \leq \ell$, choose $r \xleftarrow{R} \mathbb{Z}_p$ and compute

$$C = g^{f(\alpha_1, \dots, \alpha_\mu) + r \cdot \alpha_r}$$

using $\{g_{\mathcal{I}}\}_{\mathcal{I} \in \mathcal{W}_{d,\ell}}$ and $g_r$. Then, output (aux,f) = (r,f).

*Prove*$_{\text{pp}}$ (C, **z**, y, aux, lbl)): given a commitment $C \in \mathbb{G}$, a witness aux = (r,f), an input $\mathbf{z} = (z_1, \dots, z_\mu) \in \mathbb{Z}_p^\mu$, an output $y = f(\mathbf{z}) \in \mathbb{Z}_p$, and a label lbl, return $\perp$ if $y \neq f(\mathbf{z})$. Otherwise, do the following:

- Compute $((\pi_{1,i})_{i=1}^\mu, \pi_2) \in \mathbb{G}^{\mu+1}$ satisfying

$$e(C \cdot g^{-y}, \hat{g}) = \prod_{i=1}^{\mu} e(\pi_{i,1}, \hat{g}_i \cdot \hat{g}^{-z_i}) \cdot e(\pi_2, \hat{g}_r) \qquad (13)$$

In more details, one can do the following

- Compute polynomials $\{Q_i[X_1, \dots, X_\mu]\}_{i=1}^\mu$ such that

$$f[X_1, \dots, X_\mu] - y = \sum_{i=1}^{\mu} Q_i[X_1, \dots, X_\mu] \cdot (X_i - z_i)$$

- Choose $s_1, \dots, s_\mu \xleftarrow{R} \mathbb{Z}_p$ and compute

$$\pi_{1,i} = g^{Q_i(\alpha_1, \dots, \alpha_\mu) + s_i \cdot \alpha_r} \qquad \forall i \in [\mu]$$

together with $\pi_2 = g^{r-\sum_{i=1}^{\mu} s_i \cdot (\alpha_i - z_i)}$.

The base evaluation proof is then $\boldsymbol{\pi} = ((\pi_{1,i})_{i=1}^{\mu}, \pi_2) \in \mathbb{G}^{\mu+1}$, which is not directly provided to the verifier but used in the next step.

- Generate a NIZK proof of knowledge of $\pi_2 \in \mathbb{G}$ satisfying

$$\frac{e(C \cdot g^{-y}, \hat{g})}{\prod_{i=1}^{\mu} e(\pi_{i,1}, \hat{g}_i \cdot \hat{g}^{-z_i})} = e(\pi_2, \hat{g}_r) \qquad (14)$$

Namely,

* Choose $R_\pi \xleftarrow{R} \mathbb{G}$ and compute

$$R = e(R_\pi, \hat{g}_r)$$

* Compute $c = H(\mathrm{lbl}, C, y, \mathbf{z}, (\pi_{1,i})_{i=1}^{\mu}, R) \in \mathbb{Z}_p$.

* Compute the response $S_\pi = R_\pi \cdot \pi_2^c$.

Return the proof

$$\boldsymbol{\pi} = (c, (\pi_{1,i})_{i=1}^{\mu}, S_\pi) \in \mathbb{Z}_p \times \mathbb{G}^{\mu+1}. \qquad (15)$$

$Verify_{\mathrm{pp}}(C, y, \mathbf{z}, \pi, \mathrm{lbl})$: Given $C \in \mathbb{G}$, an input $\mathbf{z} = (z_1, \dots, z_\mu) \in \mathbb{Z}_p^{\mu}$, a purported evaluation $y \in \mathbb{Z}_p$, and a candidate proof $\pi$ with a label lbl, return 0 if $\pi$ does not parse as in (20). Otherwise, compute

$$R = e(S_\pi, \hat{g}_r) \cdot \left( \frac{e(C \cdot g^{-y}, \hat{g})}{\prod_{i=1}^{\mu} e(\pi_{i,1}, \hat{g}^{\alpha_i} \cdot \hat{g}^{-z_i})} \right)^{-c}. \qquad (16)$$

and return 1 if $c = H(\mathrm{lbl}, C, y, \mathbf{z}, (\pi_{1,i})_{i=1}^{\mu}, R)$. Otherwise, return 0.

Like the first embodiment, the above scheme provides statistical zero-knowledge in the random oracle model. It also provides simulation-extractability in the combined algebraic group and random oracle model. We note that there is one subtlety in the event that the public input $\mathbf{z} = (z_1, \dots, z_\mu)$ has strictly less than $\ell$ components (e.g., $\mu < \ell$): In this case, an evaluation proof does not guarantee in general that $C = g^{f(\alpha_1, \dots, \alpha_\mu) + \alpha_r \cdot r}$ for a polynomial $f \in \mathbb{Z}_p[X_1, \dots, X_\mu]$ such that $f$ ($\mathbf{z}$) = $y$ but it only guarantees that $C = g^{f(\alpha_1, \dots, \alpha_\ell) + \alpha_r \cdot r}$ for a polynomial $f[X_1, \dots, X_\ell]$ such that $f[\mathbf{z}, X_{\mu+1}, \dots, X_\ell] - y$ is the identically zero polynomial. In any case, this is not a problem in the application to building a simulation-extractable variant of HyperPlonk.

Moreover, when $\mathbf{z} \in \mathbb{Z}_p^{\mu}$ is a random input chosen independently of $C$ (which is usually the case in applications to SNARKs where z is usually obtained by applying a random oracle to $C$), an evaluation proof guarantees that $C = g^{f(\alpha_1, \alpha_\mu) + \alpha_r \cdot r}$ commits to a polynomial that only depends on the variables $X_1, \dots, X_\mu$

Despite the use of the Fiat-Shamir transform, the security proof (given in [30]) does not require to rewind the adversary in order to extract witnesses.

In the AGM+ROM model and under the $(d\ell, d\ell)$-DLOG assumption, the scheme is a simulation-extractable argument of knowledge of a polynomial $f \in$ $\mathbb{Z}_p[X_1, ..., X_\ell] \in \mathbb{Z}_p^{(\leq d)}[X_1, ..., X_\ell]$ such that $C = g^{f(\alpha_1, ..., \alpha\ell) + \alpha_r \cdot r}$ and

$$f(z_1, ..., z_\mu, x_{\mu+1}, ..., x_\ell) = y$$

for any $(x_{\mu+1}, ..., x_\ell) \in \mathbb{Z}_p^{\ell-\mu}$, where $(y, \mathbf{z}) \in \mathbb{Z}_p \times \mathbb{Z}_p^\mu$.

Third exemplifying embodiment

In its application to HyperPlonk [10], it is useful to consider yet another embodiment, where the verifier is guaranteed that committed polynomials have a specific form.

HyperPlonk relies on a technique of showing that a committed polynomial $f[X_1, ..., X_\ell]$ satisfies a product-check relation $\Pi_{x \in \{0,1\}^\ell} f(\mathbf{x}) = s$, for a given $s \in \mathbb{Z}_p$. In turn, the soundness of their product-check PIOP [10, Section 3.3] relies on the existence of a multilinear polynomial with specific properties. In order to compile their PIOP and apply their soundness analysis, it is useful to have a multi-variate PCS where the verifier is guaranteed that committed polynomials are multilinear, or, at least, that the committed polynomials have degree 1 in most variables. At the same time, one must preserve the prover's ability to commit to polynomials of larger degree $d > 1$.

In order to achieve zero-knowledge, HyperPlonk [10, Appendix A] also suggests transforming f-variate multilinear polynomials into polynomials that agree with the original polynomials everywhere on the hypercube $B_\ell = \{0,1\}^\ell$ but evaluate to randomlooking values outside $B_\ell$. Concretely, these "almost multilinear" polynomials (where all variables have degree 1, except one) can be written as a sum

$$f[X_1, ..., X_\ell] = f'[X_1, ..., X_\ell] + R[X_\mu] \cdot X_\mu \cdot (X_\mu - 1), \qquad (17)$$

for some $\mu \in [\ell]$, where $f' \in \mathbb{Z}_p^{(\leq 1)}[X_1, ..., X_\ell]$ is the original multilinear polynomial and $R[X_\mu]$ is a random univariate polynomial of degree t for some $t \geq 0$. In order to achieve zero-knowledge in their sub-protocols, polynomials of the form (17) have the properties that: (i) $f$ and $f'$ agree everywhere on $B_\ell$; (ii) Any set of $t + 1$ evaluations of $f$ outside $B_\ell$ are random and independent (since $R[X_\mu]$ has degree t) and can be easily simulated in zero-knowledge.

In the specific case of HyperPlonk, the verifier has to obtain evaluation proofs on correlated inputs that share the same component $X_\mu$. In this case, the above masking technique does not quite suffice. Therefore, it is necessary to slightly modify the masking technique (17) and encode the original $f' \in \mathbb{Z}_p^{(\leq 1)}[X_1, ..., X_\ell]$ as

$$f[X_1, ..., X_\ell] = f'[X_1, ..., X_\ell] + R[X_1 + X_{\mu+1}] \cdot X_\mu \cdot (X_\mu - 1), \qquad (18)$$

where $\mu + 1 < \ell$ and $R[X]$ is a random univariate polynomial of degree t.

In order to prove simulation-extractability in HyperPlonk, it is useful to consider multi-variate PCS schemes where the SRS allows committing to polynomials of the form (18) in such a way that the verifier is convinced that committed polynomials are indeed of this form. For this reason, we consider a variant where commitments live in $\widehat{\mathbb{G}}$ whereas proofs live in $\mathbb{G}$.

*CRS - Gen*$(1^\lambda, 1^d, 1^\ell)$: On input of a security parameter $\lambda$, a number of variables $\ell$ and a degree d such that $(d + 1)^\ell \in \text{poly}(\lambda)$, generate the SRS as follows:

- Choose asymmetric bilinear groups $(\mathbb{G}, \widehat{\mathbb{G}}, \mathbb{G}_T)$ of prime order $p > 2^{l(\lambda)}$, for some function $l: \mathbb{N} \to \mathbb{N}$, and $g \xleftarrow{R} \mathbb{G}, \hat{g} \xleftarrow{R} \widehat{\mathbb{G}}$.

- Pick $\alpha_1, \dots, \alpha_\ell, \alpha_r \xleftarrow{R} \mathbb{Z}_p$. Compute $g_r = g^{\alpha r}$ and $\hat{g}_r = \hat{g}^{\alpha r}$.

- For each $\mathcal{J} = (i_1, \dots, i_\ell) \in \mathcal{W}_{d,\ell}$, compute $g_{\mathcal{J}} = g^{\prod_{j=1}^{\ell} \alpha_j^{i_j}}$.

- For each $\mathcal{J} = (i_1, \dots, i_\ell) \in \mathcal{W}_{1,\ell}$, compute $\hat{g}_{\mathcal{J}} = \hat{g}^{\prod_{j=1}^{\ell} \alpha_j^{i_j}}$. Then, compute $\{\hat{g}^{(\alpha_1+\alpha_{\mu+1})^i \cdot \alpha_\mu \cdot (\alpha_\mu - 1)}\}_{i=0}^3$ for an arbitrary index $\mu \in [2, \ell - 1]$

- Choose a hash function $H: \{0,1\}^* \to \mathbb{Z}_p$ that will be modeled as a random oracle.

The public parameters are defined to be

$$pp = ((\mathbb{G}, \widehat{\mathbb{G}}, \mathbb{G}_T), g_r, \hat{g}_r, \{g_{\mathcal{J}}\}_{\mathcal{J}\in\mathcal{W}_{d,\ell}},$$

$$\{\hat{g}_{\mathcal{J}}\}_{\mathcal{J}\in\mathcal{W}_{1,\ell}}, \{\hat{g}^{(\alpha_1+\alpha_{\mu+1})^i \cdot \alpha_\mu \cdot (\alpha_\mu - 1)}\}_{i=0}^3, H)$$

*Com*$_{pp}$(**f**): To commit to a polynomial $f[X_1, \dots, X_{\mu'}] \in \mathbb{Z}_p[X_1, \dots, X_{\mu'}]$ of the form (18), for some $\mu' \leq f$, choose $r \xleftarrow{R} \mathbb{Z}_p$ and compute

$$\hat{C} = \hat{g}^{f(\alpha_1,\dots,\alpha_{\mu'})+r\cdot\alpha_r}$$

using $\{\hat{g}_{\mathcal{J}}\}_{\mathcal{J} \in \mathcal{W}_{d,\ell}}$, $\hat{g}_r$ and $\{\hat{g}^{(\alpha_1+\alpha_{\mu+1})^i \cdot \alpha_\mu \cdot (\alpha_\mu - 1)}\}_{i=0}^3$. Then, output (*aux,f*) = (*r,f*).

*Prove*$_{pp}$($\hat{C}$,**z**, *y*, aux, lbl)): given a commitment $\hat{C}$, a witness aux = (*r,f*), an input $\mathbf{z} = (z_1, \dots, z_{\mu'}) \in \mathbb{Z}_p^{\mu'}$, an output $y = f(\mathbf{z}) \in \mathbb{Z}_p$, and a label lbl, return $\perp$ if $y \neq f(\mathbf{z})$. Otherwise, do the following:

- Compute $((\pi_{1,i})_{i=1}^{\mu'}, \pi_2) \in \mathbb{G}^{\mu'+1}$ satisfying (5) by running the prover as in the second embodiment.

- Generate a NIZK proof of knowledge of $\pi_2 \in \mathbb{G}$ satisfying

$$\frac{e(g,\hat{C}\cdot\hat{g}^{-y})}{\prod_{i=1}^{\mu'} e(\pi_{i,1},\hat{g}_i\cdot\hat{g}^{-z_i})} = e(\pi_2, \hat{g}_r) \qquad (19)$$

Namely,

* Choose $R_\pi \xleftarrow{R} \mathbb{G}$ and compute

$$R = e(R_\pi, \hat{g}_r)$$

* Compute $c = H(\mathrm{lbl}, C, y, \mathbf{z}, (\pi_{1,i})_{i=1}^{\mu'}, R) \in \mathbb{Z}_p$ .

* Compute the response $S_\pi = R_\pi \cdot \pi_2^c$ .

Return the proof

$$\boldsymbol{\pi} = (c, (\pi_{1,i})_{i=1}^{\mu'}, S_\pi) \in \mathbb{Z}_p \times \mathbb{G}^{\mu'+1}. \tag{20}$$

[*Verify*$_{\mathrm{pp}}$($\hat{C}$,$y$,$\mathbf{z}$,$\pi$,lbl): Given $\hat{C} \in \widehat{\mathbb{G}}$ , an input $\mathbf{z} = (z_1, \dots, z_{\mu'}) \in \mathbb{Z}_p^{\mu'}$ , a purported evaluation $\dot{y} \in \mathbb{Z}_p$ , and a candidate proof $\pi$ with a label lbl, return 0 if $\pi$ does not parse as in (20). Otherwise, compute

$$R = e(S_\pi, \hat{g}_r) \cdot \left( \frac{e(g, \hat{C} \cdot \hat{g}^{-y})}{\prod_{i=1}^{\mu'} e(\pi_{i,1}, \hat{g}^{\alpha_i} \cdot \hat{g}^{-z_i})} \right)^{-c}. \tag{21}$$

If $c = H(\mathrm{lbl}, \hat{C}, y, \mathbf{z}, (\pi_{1,i})_{i=1}^{\mu'}, R)$ , return 1. Otherwise, return 0.

In terms of security, the above embodiment provides the same properties as our second exemplifying embodiment.

In the AGM+ROM model and under the ($d\ell$, $d\ell$)-DLOG assumption, the scheme is a simulation-extractable argument of knowledge of a polynomial $f \in \mathbb{Z}_p[X_1, \dots, X_\ell]$ of the form (18) such that $\hat{C} = \hat{g}^{f(\alpha_1, \alpha_\ell) + \alpha_r \cdot r}$ and

$$f(z_1, \dots, z_{\mu'}, x_{\mu'+1}, \dots, x_\ell) = y$$

for any $(x_{\mu'+1}, \dots, x_\ell) \in \mathbb{Z}_p^{\ell-\mu'}$ , where $(y, \mathbf{z}) \in \mathbb{Z}_p \times \mathbb{Z}_p^{\mu'}$ .

Embodiments can be used to build simulation-extractable SNARKs, in particular the first and third exemplifying embodiments.

## Simulation-extractability of Plonk.

The first embodiment can be used in order to compile the Plonk IOP [19] into a simulation-extractable SNARK by applying the framework of [27]. By replacing the randomized KZG commitment with one of our exemplifying embodiment, one can reduce the size of the structured common reference string by a factor 2, which is significant since the SRS size of Plonk is linear in the maximal size of proven circuits (where the number of gates can be as large as $2^{25}$ in some applications).

## Simulation-extractability of HyperPlonk.

As a second technical application, one of our embodiments can be used to obtain a simulation-extractable SNARK from the HyperPlonk IOP.

HyperPlonk [10] is a linear-time prover variant of Plonk [19], which relies on multi-variate polynomials and their evaluations over the Boolean hypercube. By using our third exemplifying embodiment, we can actually prove simulation-extractability (in the combined AGM+ROM model) without having to rewind in order to extract witnesses in the security proof. This allows a tighter reduction from the ($d\ell$, $d\ell$)-DLOG assumption than in rewinding-based security proofs.

**References**

[1] B. Abdolmaleki, S. Ramacher, and D. Slamanig. Lift-and-shift: Obtaining simulation extractable subversion and updatable SNARKs generically. In ACM-CCS, 2020.

[2] D. Aranha, Y. El Housni, and A. Guillevic. A survey of elliptic curves for proof systems. Designs, Codes & Cryptography, 2022.

[3] R. Barbulescu and S. Duquesne. Updating key size estimations for pairings. J. of Cryptology, 4(32), 2019.

[4] E. Ben-Sasson, I. Bentov, Y. Horesh, and M. Riabzev. Fast Reed-Solomon interactive oracle proofs of proximity. In ICALP, 2018.

[5] E. Ben-Sasson, I. Bentov, Y. Horesh, and M. Riabzev. Scalable zero knowledge with no trusted setup. In Crypto, 2019.

[6] E. Ben-Sasson, A. Chiesa, and N. Spooner. Interactive oracle proofs. In TCC, 2016B.

[7] D. Boneh, J. Drake, B. Fisch, and A. Gabizon. Halo infinite: Recursive zkSNARKs from any additive polynomial commitment scheme. In Crypto, 2021.

[8] J. Bootle, A. Chiesa, Y. Hu, and M. Orrù. Gemini: Elastic SNARKs for diverse environments. In Eurocrypt, 2022.

[9] J. Camensich, N. Chandran, and V. Shoup. A public key encryption scheme secure against key dependent chosen plaintext and adaptive chosen ciphertext attacks. In Eurocrypt, 2009.

[10] B. Chen, B. Bünz, D. Boneh, and Z. Zhang. Hyperplonk: Plonk with linear-time prover and high-degree custom gates. In Eurocrypt, 2023.

[11] A. Chiesa, Y. Hu, M. Maller, P. Mishra, P. Vesely, and N. Ward. Marlin: Preprocessing zksnarks with universal and updatable srs. In Eurocrypt, 2020.

[12] I. Damgård. Towards practical public key systems secure against chosen ciphertext attacks. In Crypto, 1991.

[13] Y. El Housni and A. Guillevic. Optimized and secure pairing-friendly elliptic curves suitable for one layer proof composition. In CANS, 2020.

[14] A. Faonio, D. Fiore, M. Kohlweiss, L. Russo, and M. Zajac. From polynomial IOP and commitments to non-malleable zkSNARKs. In TCC, 2023. Cryptology ePrint Archive Report 2023/569.

[15] S. Faust, M. Kohlweiss, G. Marson, and D. Venturi. On the non-malleability of the Fiat-Shamir transform. In Indocrypt, 2012.

[16] A. Fiat and A. Shamir. How to prove yourself: Practical solutions to identification and signature problems. In Crypto, 1986.

[17] G. Fuchsbauer, E. Kiltz, and J. Loss. The algebraic group model and its applications. In Crypto, 2018.

[18] G. Fuchsbauer, A. Plouviez, and Y. Seurin. Blind schnorr signatures and signed elgamal encryption in the algebraic group model. In Eurocrypt, 2020.

[19] G. Gabizon, Z. Williamson, and O. Ciobotaru. PLONK: Permutations over Lagrange-bases for oecumenical noninteractive arguments of knowledge. Cryptology ePrint Archive, Report 2019/953,2019.

[20] S. Galbraith, K. Paterson, and N. Smart. Pairings for cryptographers. Discrete Applied Mathematics, 156(16), 2008.

[21] C. Ganesh, H. Khoshakhlagh, M. Kohlweiss, A. Nitulescu, and M. Zajac. What makes Fiat-Shamir zkSNARKs (Updatable SRS) simulation extractable? In SCN, 2022.

[22] J. Groth and A. Sahai. Efficient non-interactive proof systems for bilinear groups. In Eurocrypt, 2008.

[23] J. Groth. Simulation-sound NIZK proofs for a practical language and constant size group signatures. In Asiacrypt, 2006.

[24] J. Groth. Short pairing-based non-interactive zero-knowledge arguments. In Asiacrypt, 2010.

[25] E. Kachisa, E. Schaefer, and M. Scott. Constructing Brezing-Weng pairing-friendly elliptic curves using elements in the cyclotomic field. In Pairing, 2008.

[26] A. Kate, G. Zaverucha, and I. Goldberg. Constant-size commitments to polynomialsand applications. In Asiacrypt, 2010.

[27] M. Kohlweiss, M. Pancholi, and A. Takahashi. How to compile polynomial IOP into simulation-extractable SNARKs: a modular approach. In TCC, 2023. Cryptology ePrint Archive Report 2023/1067.

[28] T. Kohrita and P. Towa. Zeromorph: Zero-knowledge multilinearevaluation proofs from homomorphic univariate commitments. Cryptology ePrint Archive Report 2023/917, 2023.

[29] A. Kosba, Z. Zhao, A. Miller, Y. Qian, H. Chan, C. Papamanthou, R. Pass, a. shelat, and E. Shi. CØcØ: A framework for building composable zero-knowledge proofs. Cryptology ePrint Archive Report 2015/1093.

[30] B. Libert. Making HyperPlonk simulation-extractable. Technical report, Zama, June 2023.

[31] M. Maller, S. Bowe, M. Kohlweiss, and S. Meiklejohn. Sonic: Zero-knowledge SNARKs from linear-size universal and updateable structured reference strings. In ACM-CCS, 2019.

[32] C. Papamanthou, E. Shi, and R. Tamassia. Signatures of correct computation. In TCC, 2013.

[33] T. Pedersen. Non-interactive and information-theoretic secure verifiable secret sharing. In Crypto, 1991.

[34] C.-P. Schnorr. Efficient identification and signatures for smart cards. In Crypto, 1989.

[35] Y. Zhang, D. Genkin, J. Katz, D. Papadopoulos, and C. Papamanthou. A zero-knowledge version of vSQL. Cryptology ePrint Archive Report 2017/1146.

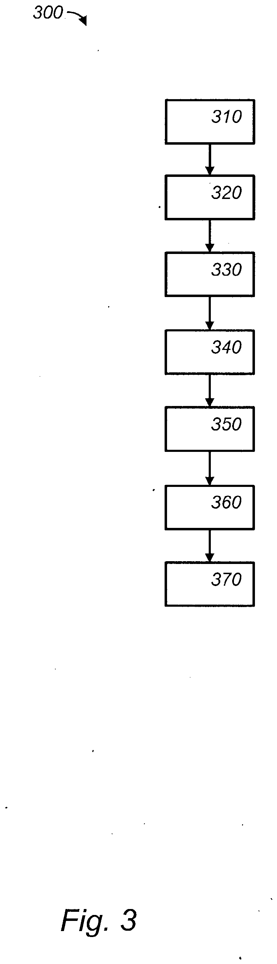

**Figure** 3 schematically shows an example of an embodiment of a proving method 300. Method 300 is computer-implementable and provides cryptographically committing to a polynomial and for proving to a verifier an evaluation of the polynomial. Method 300 comprises

- providing (310) a base polynomial commitment scheme, PCS, the base PCS comprising
- a base commitment function configured to receive as input a polynomial and to generate as output a base commitment string, and
- a base proof function configured to receive as input a function argument for a polynomial and to produce as output a base evaluation proof to show that the polynomial evaluates to a function value at the function argument, the base PCS being associated with a base verification equation in which a base commitment string and base evaluation proof may be substituted, and which base verification equation is satisfied only if a polynomial corresponding to the substituted base commitment string evaluates to the function value at the function argument associated with the substituted base proof, the method further comprising

- in a commitment phase:

  - obtaining (320) a polynomial, and computing a base commitment string for the obtained polynomial using the base commitment function,
  - providing (330) the base commitment string to a verifier device.

- in a proof phase:

  - obtaining (340) a function argument for the polynomial,
  - computing (350) a first proof, the first proof comprising a base evaluation proof obtained using the base proof function showing that the polynomial evaluates to a function value at the obtained function argument,
  - computing (360) a zero-knowledge second proof according to a non-interactive zero knowledge, NIZK, scheme, the second zero-knowledge proof proving knowledge of the base evaluation proof satisfying the base verification equation for the base commitment string corresponding to the obtained polynomial,
  - providing (370) the second proof to a verifier device.

Many different ways of executing the method are possible, as will be apparent to a person skilled in the art. For example, the order of the steps can be performed in the shown order, but the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the method may be executed using software, which comprises instructions for causing a processor system to perform method 300. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a fieldprogrammable gate array (FPGA), to perform the method.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

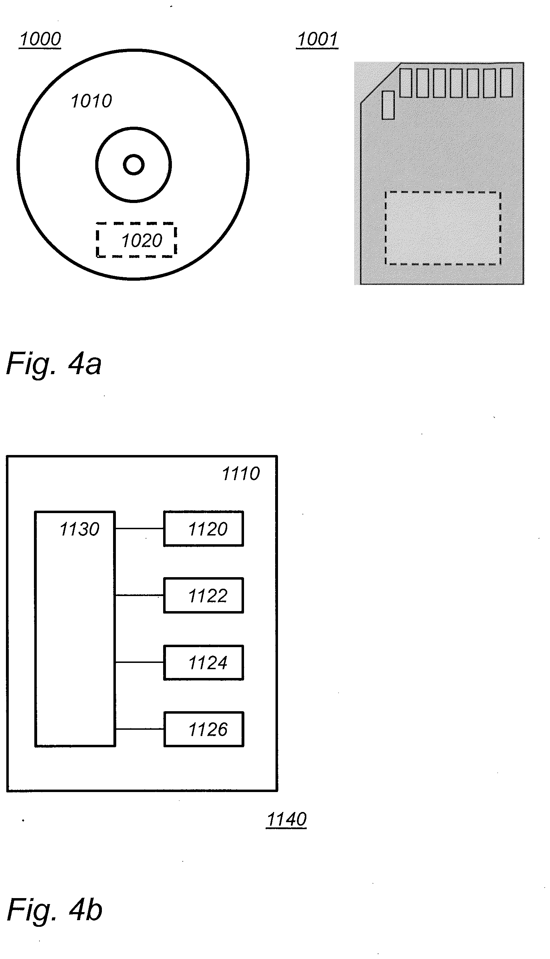

**Figure 4a** shows a computer readable medium 1000 having a writable part 1010, and a computer readable medium 1001 also having a writable part. Computer readable medium 1000 is shown in the form of an optically readable medium. Computer readable medium 1001 is shown in the form of an electronic memory, in this case a memory card. Computer readable medium 1000 and 1001 may store data 1020 wherein the data may indicate instructions, which when executed by a processor system, cause a processor system to perform an embodiment of a method cryptographically committing to a polynomial and for proving an evaluation thereof, according to an embodiment. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform an embodiment of said method cryptographically committing to a polynomial and for proving an evaluation thereof.

**Figure 4b** shows in a schematic representation of a processor system 1140 according to an embodiment of a prover device configured for cryptographically committing to a polynomial and for proving an evaluation thereof. The processor system comprises one or more integrated circuits 1110. The architecture of the one or more integrated circuits 1110 is schematically shown in Figure 4b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contactless communication, using an antenna and/or connectors, respectively.

For example, in an embodiment, processor system 1140, e.g., the prover device or prover system may comprise a processor circuit and a memory circuit, the processor being arranged to execute software stored in the memory circuit. For example, the processor circuit may be an Intel Core i7 processor, ARM Cortex-R8, etc. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc. arranged for providing the software.

While system 1140 is shown as including one of each described component, the various components may be duplicated in various embodiments. For example, the processing unit 1120 may include multiple microprocessors that are configured to independently execute the methods described herein or are configured to perform steps or subroutines of the methods described herein such that the multiple processors cooperate to achieve the functionality described herein. Further, where the system 1140 is implemented in a cloud computing system, the various hardware components may belong to separate physical systems. For example, the processor 1120 may include a first processor in a first server and a second processor in a second server.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

**Claims**

1. A computer-implementable method (300) for cryptographically committing to a polynomial and for proving to a verifier an evaluation of the polynomial, the method comprising

- providing (310) a base polynomial commitment scheme, PCS, the base PCS comprising
- a base commitment function configured to receive as input a polynomial and to generate as output a base commitment string, and
- a base proof function configured to receive as input a function argument for a polynomial and to produce as output a base evaluation proof to show that the polynomial evaluates to a function value at the function argument, the base PCS being associated with a base verification equation in which a base commitment string and base evaluation proof may be substituted, and which base verification equation is satisfied only if a polynomial corresponding to the substituted base commitment string evaluates to the function value at the function argument associated with the substituted base proof, the method further comprising
- in a commitment phase:

  - obtaining (320) a polynomial, and computing a base commitment string for the obtained polynomial using the base commitment function,
  - providing (330) the base commitment string to a verifier device.

- in a proof phase:

  - obtaining (340) a function argument for the polynomial,
  - computing (350) a first proof, the first proof comprising a base evaluation proof obtained using the base proof function showing that the polynomial evaluates to a function value at the obtained function argument,
  - computing (360) a zero-knowledge second proof according to a non-interactive zero knowledge, NIZK, scheme, the second zero-knowledge proof proving knowledge of the base evaluation proof satisfying the base verification equation for the base commitment string corresponding to the obtained polynomial,

  - providing (370) the second proof to a verifier device.

2. The method of Claim 1, further comprising

   - in a verification phase:
   - verifying that the base commitment string and the second proof satisfy a verification equation according to the NIZK scheme.

3. The method according to any of the preceding claims, wherein the NIZK scheme comprises a $\Sigma$-protocol proving knowledge of a homomorphism pre-image.

4. The method as in claim 3, wherein

   - the homomorphism pre-image is a discrete logarithm, and/or
   - the NIZK scheme comprises a $\Sigma$-protocol, and/or
   - the NIZK scheme comprises a Groth-Sahai proof.

5. The method according to any of the preceding claims, wherein the base commitment function is configured for the base commitment string to have a length which is sublinear in the number of variables of the polynomial, and/or in the variable-degree of the variables in the polynomial.

6. The method according to any of the preceding claims, wherein the base proof function is configured for the base evaluation proof to have a length which is sublinear in the total degree of the polynomial.

7. The method according to any of the preceding claims, wherein the base commitment function is knowledge-sound, and

   - the base evaluation proofs are not simulation-extractable, and/or
   - the base evaluation proofs are malleable, and/or
   - the base evaluation proofs are not zero-knowledge.

8. The method according to any of the preceding claims, wherein

   - the commitment string comprises one or more group elements in one or more groups ($\mathbb{G}$, $\widehat{\mathbb{G}}$), and/or

- the base evaluation proof comprises one or more group elements in the one or more groups ($\mathbb{G}$ , $\widehat{\mathbb{G}}$ ), and

- the base verification equation computes a product of one or more group elements in a further group ( $\mathbb{G}_T$ ), wherein the one or more group elements are obtained by applying a bilinear map to group elements in the commitment string and/or base evaluation proof.

9. The method according to any of the preceding claims, wherein the base evaluation proof is randomized, the second proof revealing part, but not all, of the first proof.

10. The method according to any of the preceding claims, wherein

- the base commitment function for a polynomial $f[X] = \sum_{i=0}^{d} f_i \cdot X^i$ , is configured to select a random scalar $\gamma$ and to compute $C = g^\gamma \cdot \prod_{i=1}^{d+1} g_i^{f_{i-1}}$ , the base proof function computes $\pi = \prod_{i=0}^{d-1} g_i^{q_i} = g^{q(\alpha)}$ , wherein $q[X] = (F_0[X] - y \cdot X)/(X \cdot (X - z)) = \sum_{i=0}^{d-1} q_i \cdot X^i$ , with $F[X] = X \cdot f[X] + \gamma$ and $F_0[X] = F[X] - \gamma$, for argument z and function value $y$, and wherein the verification equation comprises $e(C \cdot g^{-\gamma} \cdot g_1^{-y}, \hat{g}) = e(\pi, \hat{g}_2 \cdot \hat{g}_1^{-z})$ , or

- the base commitment function for a polynomial $f[X_1, ..., X_\mu] \in \mathbb{Z}_p[X_1, ..., X_\mu]$ , for some $\mu \leq \ell$, is configured to select a random integer r and to compute $C = g^{f(\alpha_1, \alpha_\mu) + r \cdot \alpha_r}$, the base proof function computes $\pi_{1,i} = g^{Q_i(\alpha_1, ..., \alpha_\mu) + s_\ell \cdot \alpha_r}$ $\forall i \in [\mu]$, and $\pi_2 = g^{r - \sum_{i=1}^{\mu} s_i \cdot (\alpha_i - z_i)}$ , wherein $f[X_1, ..., X_\mu] - y = \sum_{i=1}^{\mu} Q_i[X_1, ..., X_\mu] \cdot (X_i - z_i)$ , for argument $\mathbf{z} = (z_1, ..., z_\mu)$ and function value y, wherein the verification equation comprises $e(C \cdot g^{-y}, \hat{g}) = \prod_{i=1}^{\mu} e(\pi_{i,1}, \hat{g}_i \cdot \hat{g}^{-z_i}) \cdot e(\pi_2, \hat{g}_r)$, or

- the base commitment function for a polynomial $f[X_1, ..., X_{\mu'}] \in \mathbb{Z}_p[X_1, ..., X_{\mu'}]$ for some $\mu' \leq \ell$, and of the form $f[X_1, ..., X_\ell] = f'[X_1, ..., X_\ell] + R[X_1 + X_{\mu+1}] \cdot X_\mu \cdot (X_\mu - 1)$, is configured to select a random integer r and to compute $\hat{C} = \hat{g}^{f(\alpha_1, ..., \alpha_{\mu'}) + r \cdot \alpha_r}$, wherein the verification equation comprises $e(g, \hat{C} \cdot \hat{g}^{-Y}) = \prod_{i=1}^{\mu'} e(\pi_{i,1}, \hat{g}_i \cdot \hat{g}^{-z_i}) \cdot e(\pi_2, \hat{g}_r)$ , for argument $\mathbf{z} = (z_1, ..., z_{\mu'}) \in \mathbb{Z}_p^{\mu'}$ , a function value Y.

11. A SNARK method comprising for proving knowledge of a witness *w* for a statement *x*, such that *R(x,w)* = 1 for an NP relation *R*, wherein the method comprises a commitment phase and proof phase according to any of the preceding claims for a set of polynomials associated with relation *R*.

12. A SNARK method as in Claim 11, comprising

- deriving from the relation R a polynomial oracle proof comprising a set of polynomials, the method further comprising
- computing a commitment for the set of polynomials according to a method according to any of the preceding claims, sending the commitments to a verifier device,
- receiving from the verifier device a set of function arguments for the set of polynomials,
- obtaining a set of evaluations at the set of function arguments for the set of polynomials, and computing therefore a corresponding zero-knowledge second proof,
- sending the set of evaluations and corresponding zero-knowledge second proofs to the verifier device.

13. A method as in Claim 11 or 12 for verifiable computation, comprising

- receiving a request for an outsourced computation performed on an input X,

- performing the computation obtaining a result Y,
- generating a proof of knowledge of result Y, for a relation R (X, Y) which relation indicates that Y is the correct output for input X for the outsourced computation.

14. A system comprising: one or more processors; and one or more storage devices storing instructions that, when executed by the one or more processors, cause the one or more processors to perform operations for any one of Claims 1-13.

15. A transitory or non-transitory computer readable medium (1000) comprising data (1020) representing instructions, which when executed by a processor system, cause the processor system to perform the method according to any one of Claims 1-13.

100

110
111
112
113

120
121
122
123

Fig. 1a

102

120

110

172

Fig. 1b

200

*201*                *202*

211 — 210 — 212

230

221 — 220 — 222

232

## Fig. 2a

203

*201*                *202*

211 — 210 — 212

250

221 — 220 — 223

212

223

240 — 242

252

240

230

## Fig. 2b

300 ⟍

```
        ┌─────────┐
        │   310   │
        └─────────┘
             │
             ▼
        ┌─────────┐
        │   320   │
        └─────────┘
             │
             ▼
        ┌─────────┐
        │   330   │
        └─────────┘
             │
             ▼
        ┌─────────┐
        │   340   │
        └─────────┘
             │
             ▼
        ┌─────────┐
        │   350   │
        └─────────┘
             │
             ▼
        ┌─────────┐
        │   360   │
        └─────────┘
             │
             ▼
        ┌─────────┐
        │   370   │
        └─────────┘
```

*Fig. 3*

_1000_ _1001_

_1010_

_1020_

# Fig. 4a

_1110_

_1130_ _1120_

_1122_

_1124_

_1126_

_1140_

# Fig. 4b

Europäisches Patentamt
European Patent Office
Office européen des brevets

# EUROPEAN SEARCH REPORT

Application Number

EP 23 31 5390

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | ANTONIO FAONIO ET AL: "From Polynomial IOP and Commitments to Non-malleable zkSNARKs", IACR, INTERNATIONAL ASSOCIATION FOR CRYPTOLOGIC RESEARCH , vol. 20230422:102730 22 April 2023 (2023-04-22), pages 1-65, XP061078221, Retrieved from the Internet: URL:https://eprint.iacr.org/archive/2023/569/1682159250.pdf [retrieved on 2023-04-24] | 1-4,7-9, 14,15 | INV. H04L9/32 |
| Y | * section 4 * | 5,6, 10-13 | |
| X,D | MARKULF KOHLWEISS ET AL: "How to Compile Polynomial IOP into Simulation-Extractable SNARKs: A Modular Approach", IACR, INTERNATIONAL ASSOCIATION FOR CRYPTOLOGIC RESEARCH , vol. 20230708:113929 8 July 2023 (2023-07-08), pages 1-37, XP061079218, Retrieved from the Internet: URL:https://eprint.iacr.org/archive/2023/1067/1688816369.pdf [retrieved on 2023-07-11] | 1-4,7-9, 14,15 | |
| Y | * section 3, applications section 4 * | 5,6, 10-13 | |

TECHNICAL FIELDS SEARCHED (IPC)

H04L

-/--

The present search report has been drawn up for all claims

| Place of search | Date of completion of the search | Examiner |
|---|---|---|
| Munich | 15 March 2024 | Manet, Pascal |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 3

Europäisches
Patentamt

European
Patent Office

Office européen
des brevets

## EUROPEAN SEARCH REPORT

Application Number

**EP 23 31 5390**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | BONEH DAN ET AL: "Halo Infinite: Proof-Carrying Data from Additive Polynomial Commitments", 11 August 2021 (2021-08-11), TOPICS IN CRYPTOLOGY – CT-RSA 2020 : THE CRYPTOGRAPHERS' TRACK AT THE RSA CONFERENCE 2020, SAN FRANCISCO, CA, USA, FEBRUARY 24-28, 2020, SPRINGER, 201 OLIN LIBRARY CORNELL UNIVERSITY ITHACA, NY 14853, PAGE(S) 649 – 680, XP047604882, [retrieved on 2021-08-11] * section 1 * | 5,6, 11-13 | |
| A | MARKULF KOHLWEISS ET AL: "On Simulation-Extractability of Universal zkSNARKs", IACR, INTERNATIONAL ASSOCIATION FOR CRYPTOLOGIC RESEARCH , vol. 20210427:080722 27 April 2021 (2021-04-27), pages 1-36, XP061059063, Retrieved from the Internet: URL:https://eprint.iacr.org/2021/511.pdf [retrieved on 2021-04-27] * section 2.4, 3.1, 4 and 5 * | 1-15 | |

-/--

TECHNICAL FIELDS
SEARCHED (IPC)

The present search report has been drawn up for all claims

| Place of search | Date of completion of the search | Examiner |
|---|---|---|
| Munich | 15 March 2024 | Manet, Pascal |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

page 2 of 3

Europäisches
Patentamt

European
Patent Office

Office européen
des brevets

## EUROPEAN SEARCH REPORT

**Application Number**

EP 23 31 5390

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | BENOIT LIBERT: "Vector Commitments With Proofs of Smallness: Short Range Proofs and More", IACR, INTERNATIONAL ASSOCIATION FOR CRYPTOLOGIC RESEARCH , vol. 20230928:162125 28 September 2023 (2023-09-28), pages 1-72, XP061081165, Retrieved from the Internet: URL:https://eprint.iacr.org/archive/2023/800/1695918085.pdf [retrieved on 2023-09-28] * sections 1.2 and 3 * ----- | 10 | |

TECHNICAL FIELDS
SEARCHED      (IPC)

The present search report has been drawn up for all claims

| Place of search | Date of completion of the search | Examiner |
|---|---|---|
| Munich | 15 March 2024 | Manet, Pascal |

EPO FORM 1503 03.82 (P04C01)

page 3 of 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **B. ABDOLMALEKI** ; **S. RAMACHER** ; **D. SLAMANIG**. Lift-and-shift: Obtaining simulation extractable subversion and updatable SNARKs generically. *ACM-CCS*, 2020
- **D. ARANHA** ; **Y. EL HOUSNI** ; **A. GUILLEVIC**. A survey of elliptic curves for proof systems. *Designs, Codes & Cryptography*, 2022
- **R. BARBULESCU** ; **S. DUQUESNE**. Updating key size estimations for pairings. *J. of Cryptology*, 2019, vol. 4 (32)
- **E. BEN-SASSON** ; **I. BENTOV** ; **Y. HORESH** ; **M. RIABZEV**. Fast Reed-Solomon interactive oracle proofs of proximity. *ICALP*, 2018
- **E. BEN-SASSON** ; **I. BENTOV** ; **Y. HORESH** ; **M. RIABZEV**. Scalable zero knowledge with no trusted setup. *Crypto*, 2019
- **E. BEN-SASSON** ; **A. CHIESA** ; **N. SPOONER**. Interactive oracle proofs. *TCC*, 2016
- **D. BONEH** ; **J. DRAKE** ; **B. FISCH** ; **A. GABIZON**. Halo infinite: Recursive zkSNARKs from any additive polynomial commitment scheme. *Crypto*, 2021
- **J. BOOTLE** ; **A. CHIESA** ; **Y. HU** ; **M. ORRÙ**. Gemini: Elastic SNARKs for diverse environments. *Eurocrypt*, 2022
- **J. CAMENSICH** ; **N. CHANDRAN** ; **V. SHOUP**. A public key encryption scheme secure against key dependent chosen plaintext and adaptive chosen ciphertext attacks. *Eurocrypt*, 2009
- **B. CHEN** ; **B. BÜNZ** ; **D. BONEH** ; **Z. ZHANG**. Hyperplonk: Plonk with linear-time prover and high-degree custom gates. *Eurocrypt*, 2023
- **A. CHIESA** ; **Y. HU** ; **M. MALLER** ; **P. MISHRA** ; **P. VESELY** ; **N. WARD**. Marlin: Preprocessing zksnarks with universal and updatable srs. *Eurocrypt*, 2020
- **I. DAMGÅRD**. Towards practical public key systems secure against chosen ciphertext attacks. *Crypto*, 1991
- **Y. EL HOUSNI** ; **A. GUILLEVIC**. Optimized and secure pairing-friendly elliptic curves suitable for one layer proof composition. *CANS*, 2020
- **A. FAONIO** ; **D. FIORE** ; **M. KOHLWEISS** ; **L. RUSSO** ; **M. ZAJAC**. From polynomial IOP and commitments to non-malleable zkSNARKs. *TCC*, 2023
- **S. FAUST** ; **M. KOHLWEISS** ; **G. MARSON** ; **D. VENTURI**. On the non-malleability of the Fiat-Shamir transform. *Indocrypt*, 2012

- **A. FIAT** ; **A. SHAMIR**. How to prove yourself: Practical solutions to identification and signature problems. *Crypto*, 1986
- **G. FUCHSBAUER** ; **E. KILTZ** ; **J. LOSS**. The algebraic group model and its applications. *Crypto*, 2018
- **G. FUCHSBAUER** ; **A. PLOUVIEZ** ; **Y. SEURIN**. Blind schnorr signatures and signed elgamal encryption in the algebraic group model. *Eurocrypt*, 2020
- **G. GABIZON** ; **Z. WILLIAMSON** ; **O. CIOBOTARU**. *PLONK: Permutations over Lagrange-bases for oecumenical noninteractive arguments of knowledge*
- **S. GALBRAITH** ; **K. PATERSON** ; **N. SMART**. Pairings for cryptographers. *Discrete Applied Mathematics*, 2008, vol. 156 (16)
- **C. GANESH** ; **H. KHOSHAKHLAGH** ; **M. KOHLWEISS** ; **A. NITULESCU** ; **M. ZAJAC**. What makes Fiat-Shamir zkSNARKs (Updatable SRS) simulation extractable?. *SCN*, 2022
- **J. GROTH** ; **A. SAHAI**. Efficient non-interactive proof systems for bilinear groups. *Eurocrypt*, 2008
- **J. GROTH**. Simulation-sound NIZK proofs for a practical language and constant size group signatures. *Asiacrypt*, 2006
- **J. GROTH**. Short pairing-based non-interactive zero-knowledge arguments. *Asiacrypt*, 2010
- **E. KACHISA** ; **E. SCHAEFER** ; **M. SCOTT**. Constructing Brezing-Weng pairing-friendly elliptic curves using elements in the cyclotomic field. *Pairing*, 2008
- **A. KATE** ; **G. ZAVERUCHA** ; **I. GOLDBERG**. Constant-size commitments to polynomialsand applications. *Asiacrypt*, 2010
- **M. KOHLWEISS** ; **M. PANCHOLI** ; **A. TAKAHASHI**. How to compile polynomial IOP into simulation-extractable SNARKs: a modular approach. *TCC*, 2023
- **T. KOHRITA** ; **P. TOWA**. *Zeromorph: Zero-knowledge multilinearevaluation proofs from homomorphic univariate commitments*, 2023
- **A. KOSBA** ; **Z. ZHAO** ; **A. MILLER** ; **Y. QIAN** ; **H. CHAN** ; **C. PAPAMANTHOU** ; **R. PASS** ; **E. SHI**. *CØcØ: A framework for building composable zero-knowledge proofs*
- **B. LIBERT**. Making HyperPlonk simulation-extractable. *Technical report*, June 2023

- **M. MALLER** ; **S. BOWE** ; **M. KOHLWEISS** ; **S. MEIKLEJOHN**. Sonic: Zero-knowledge SNARKs from linear-size universal and updateable structured reference strings. *ACM-CCS*, 2019
- **C. PAPAMANTHOU** ; **E. SHI** ; **R. TAMASSIA**. Signatures of correct computation. *TCC*, 2013
- **T. PEDERSEN**. Non-interactive and information-theoretic secure verifiable secret sharing. *Crypto*, 1991
- **C.-P. SCHNORR**. Efficient identification and signatures for smart cards. *Crypto*, 1989
- **Y. ZHANG** ; **D. GENKIN** ; **J. KATZ** ; **D. PAPADOPOULOS** ; **C. PAPAMANTHOU**. *A zero-knowledge version of vSQL*